(19) Europäisches Patentamt
European Patent Office
Office européen des brevets

(11) **EP 3 245 046 B1**

(12) **EUROPÄISCHE PATENTSCHRIFT**

(45) Veröffentlichungstag und Bekanntmachung des Hinweises auf die Patenterteilung:
**13.02.2019 Patentblatt 2019/07**

(21) Anmeldenummer: **16794994.0**

(22) Anmeldetag: **08.11.2016**

(51) Int Cl.:
*B29C 67/00* (2017.01)          *C08K 3/36* (2006.01)
*C08L 83/04* (2006.01)          *C08L 83/14* (2006.01)

(86) Internationale Anmeldenummer:
**PCT/EP2016/077016**

(87) Internationale Veröffentlichungsnummer:
**WO 2017/081028 (18.05.2017 Gazette 2017/20)**

(54) **SILICONZUSAMMENSETZUNGEN ZUR HERSTELLUNG ELASTOMERER FORMTEILE MITTELS BALLISTISCHER VERFAHREN**

SILICONE COMPOSITIONS FOR PRODUCING ELASTOMERIC MOLDED PARTS BY MEANS OF BALLISTIC METHODS

COMPOSITIONS DE SILICONE PERMETTANT DE FABRIQUER DES PIÈCES MOULÉES ÉLASTOMÈRES AU MOYEN D'UN PROCÉDÉ BALISTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2015 DE 102015222030**
**27.11.2015 PCT/EP2015/077987**

(43) Veröffentlichungstag der Anmeldung:
**22.11.2017 Patentblatt 2017/47**

(73) Patentinhaber: **Wacker Chemie AG**
**81737 München (DE)**

(72) Erfinder:
• **ACHENBACH, Frank**
**84359 Simbach (DE)**
• **BRENNENSTUHL, Werner**
**84508 Burgkirchen (DE)**
• **DORMEIER, Siegfried**
**94166 Stubenberg (DE)**
• **SELBERTINGER, Ernst**
**84489 Burghausen (DE)**

(74) Vertreter: **Bitterlich, Bianca et al**
**Wacker Chemie AG**
**Intellectual Property**
**Hanns-Seidel-Platz 4**
**81737 München (DE)**

(56) Entgegenhaltungen:
**WO-A1-2012/166870      WO-A1-2014/018814**
**WO-A1-2015/107333      WO-A1-2016/071241**
**US-A1- 2009 225 640**

**Beschreibung**

Die Erfindung betrifft vernetzbare Siliconzusammensetzungen, deren erfindungsgemäße Eigenschaften die Herstellung von elastomeren Formkörpern mittels ballistischer generativer Verfahren (3D-Druck) ermöglichen.

**Stand der Technik**

Für die Herstellung von elastomeren Formteilen ausgehend von vernetzbaren Siliconkautschukzusammensetzungen stehen zahlreiche Verfahren zur Verfügung. Je nach Konsistenz und Vernetzungsmechanismus der Siliconkautschukzusammensetzung kann die Herstellung von Formteilen z.B. im Spritzguss, im Pressformverfahren, im Extrusionsverfahren, durch Kalandrieren, Vergießen etc. erfolgen. Diesen konventionellen Verfahren ist gemeinsam, dass die Eigenschaften des gebildeten Formteils (Härte, Reißfestigkeit, Dehnbarkeit, Farbe etc.) im Wesentlichen durch die stoffliche Zusammensetzung der vernetzbaren Siliconkautschukzusammensetzung festgelegt sind, wodurch diese Verfahren typischerweise bzgl. der mechanischen, optischen und elektrischen Eigenschaften weitgehend isotrope Siliconformteile liefern. Die Form der auf diese Weise gebildeten Siliconteile wird entweder durch Verwendung spezieller Formen (Spritzgussformen, Pressmoldingformen, Gießformen), innerhalb derer die Vernetzung erfolgt, bestimmt, oder wird durch Extrusionsdüsen, Kalandrierwalzen etc. festgelegt.

Die konventionellen Verarbeitungsverfahren stoßen jedoch zunehmend an ihre Grenzen, wenn Siliconformteile komplexerer Geometrie, unterschiedlicher Materialzusammensetzung und/oder variabler Eigenschaftsprofile benötigt werden. Der allgemeine Trend hin zur Individualisierung und individuellen Anpassung von Gebrauchsartikeln bedingt zudem kleinere Stückzahlen (z.B. Prototypen, individuell angepasste Prothesen etc.), die Notwendigkeit einer raschen Verfügbarkeit und eine einfache Umstellung auf neue Produkt-Serien, wodurch die Effizienz konventioneller Verfahren nicht mehr gegeben ist.

Ein zunehmend an Bedeutung gewinnendes Verfahren zur Herstellung von Formteilen ist das generative Fertigungsverfahren (*Additive Manufacturing*; 3D-Druck Verfahren), welches zahlreiche unterschiedliche Techniken umfasst, denen ein automatisierter additiver Schichtaufbau des Formteils gemeinsam ist (A. Gebhardt, Generative Fertigungsverfahren, Carl Hanser Verlag, München 2013). Das Generative Fertigungsverfahren bietet nicht nur die Möglichkeit, die oben genannten Unzulänglichkeiten der konventionellen Verarbeitungsverfahren zu vermeiden, sondern ermöglicht ein grundlegend neuartiges Design von Formartikeln.

Der additive schichtweise Aufbau des Formteils kann erfolgen, indem eine aufgebrachte Schicht des vernetzbaren Materials ortsselektiv vernetzt wird. Die ortsselektive Vernetzung kann beispielsweise mittels eines UV- oder IR-Lasers erfolgen. Eine ortsselektive Vernetzung kann auch herbeigeführt werden, indem ein die Vernetzung initiierendes Agens (z.B. Katalysator) ortsgenau durch Injektion, Jetting, Sprühen etc. aufgebracht wird, wie für die Herstellung von Siliconelastomerteilen beschrieben in WO2015/059502 A1. Ortsselektive Vernetzung bedeutet, dass nur jenes Material der Schicht vernetzt wird, welches den späteren Formartikel bildet; das nichtvernetzte Material wird letztlich entfernt und kann ggf. wiederverwendet werden. Ein additiver schichtweiser Aufbau des Formteils kann jedoch auch dadurch erfolgen, dass das vernetzbare Material ortsselektiv aufgebracht wird (z.B. mittels eines Druckkopfes in Form diskreter Tröpfchen), d.h. nur an jenen Stellen, die Bestandteil des zu bildenden Formkörpers werden. Die auf diese Weise aufgebrachte Schicht wird im Allgemeinen nicht geschlossen sein, sondern unmittelbar einen Querschnitt des gewünschten Formkörpers abbilden. Die ortsselektiv aufgebrachte Masse wird anschließend vernetzt (z.B. durch flächige Bestrahlung) und die nächste Schicht wird ortsselektiv aufgebracht usw. Falls es die Form des zu druckenden Teiles erforderlich macht (z.B. bei überhängenden Strukturen, Hohlräumen etc.), kann zusätzlich zum vernetzbaren Siliconmaterial ein geeignetes Stützmaterial aufgebracht werden, welches nach Beendigung des Druckvorgangs wieder entfernt werden kann. Das ortsselektive Aufbringen der vernetzbaren Masse kann z.B. durch diskontinuierliches (diskretes) Jetten von Tröpfchen (so genannte ballistische Verfahren) oder durch kontinuierliches Dispensen dünner Stränge erfolgen. Grundsätzlich ermöglicht das Jetten im Vergleich zum Dispensen das Drucken feinerer struktureller Details sowie komplexerer Strukturen. Der Vorteil des Dispensen besteht in der Möglichkeit, größere Materialmengen pro Zeiteinheit aufbringen zu können. Zusätzlich ermöglicht das Dispensen auch höherviskose Materialien aufzubringen, so dass es von Vorteil sein kann, beide Techniken dadurch zu kombinieren, indem im 3D-Drucker zusätzlich zu der (oder den) Jetting-Druckdüse(n) auch eine oder ggf. mehrere Dispens-Düsen angebracht werden. Auf diese Weise können z.B. filigrane Teile des Formkörpers mittels der Jetting-Düse aufgebaut werden und größer volumige Teile des Formkörpers durch Dispensen gedruckt werden. Hinsichtlich der rheologischen Anforderungen, welche das Jetten bzw. Dispensen an das zu druckende Material stellen, erweist sich das Jetting als wesentlich anspruchsvoller.

WO2015/107333 A1 beschreibt ein 3D Druck Verfahren zur Herstellung von Prothesen aus Siliconelastomeren durch (kontinuierliche) Extrusion der vernetzungsfähigen Siliconkautschukzusammensetzung aus einer Mischdüse. Der 3D Druck wird ggf. unterstützt durch eine zweite Mischdüse zur Extrusion eines thermoplastischen Materials, welches als Stützmaterial für die zu druckende Siliconkautschukzusammensetzung dient. Die Vernetzung der Siliconkautschukzusammensetzung erfolgt durch platinkatalysierte Additionsreaktion bei Raumtemperatur (Hydrosilylierung). Nachteilig an diesem Verfahren ist die für den Druck feiner Details nicht erreichbare, ortsgenaue Platzierung kleinster Siliconkautschukzusammensetzungen. Des Weiteren lässt sich der Vernetzungszeitpunkt nach dem Vermischen der beiden Kautschukkomponenten nicht mehr beeinflussen, was u.a. den Nachteil hat, dass im Verlauf des Druckvorgangs sehr unterschiedlich stark vernetzte Bereiche der Siliconkautschukzusammensetzung in Kontakt gebracht werden (wenn die Verarbeitungszeit der Kautschukmasse kürzer als die Druckzeit ist) oder dass die Tragfähigkeit der gedruckten Struktur nicht gegeben ist (Verarbeitungszeit länger als Druckzeit).

Eine spezielle Ausführungsform des generativen Fertigungsverfahren stellen die ballistischen Verfahren dar, welche sich dadurch auszeichnen, dass das ortsselektive Aufbringen der vernetzbaren Masse mit Hilfe eines Druckkopfes in Form einzelner Tröpfchen (Voxel) erfolgt (*Jetting; Inkjet printing*). Die aufgebrachte Masse kann nachfolgend z.B. mittels elektromagnetischer Strahlung vernetzt werden, wodurch eine dünne Schicht des Formteils gebildet wird. Dieser Vorgang des schichtweisen Aufbaus wiederholt sich solange, bis der vollständige Formkörper gebildet ist.

Bei den ballistischen Verfahren (Jetting) unterscheidet man grundsätzlich zwischen dem kontinuierlichen inkjet (CIJ) printing und dem drop-on-demand (DOD)inkjet printing. Beide Methoden können Tröpfchen mit Durchmessern von 10 μm bis zu einigen hundert μm erzeugen.

Im CIJ-Verfahren wird ein kontinuierlicher Strom an Tröpfchen erzeugt, indem das Material unter hohem Druck aus einer Düse ausgestoßen wird und der entstehende Flüssigkeitsstrahl infolge Rayleigh Instabilität zu Einzeltröpfchen zerfällt. Die elektrostatisch geladenen Tröpfchen werden mittels elektrischer Ablenkplatten so dirigiert, dass diese entweder ortsgenau auf die Arbeitsebene (Substrat) gelangen oder (falls kein Druck erfolgen soll), in eine Rückflussrinne gelangen, durch welche sie der Wiederverwendung zugeführt werden können. Diese Rückführung des zu druckenden Materials weist im Fall von vernetzbaren Siliconkautschukzusammensetzungen neben dem Kontaminationsrisiko die gravierende Gefahr einer massiven Veränderung der rheologischen Eigenschaften infolge beginnender Vernetzung auf und ist daher nicht praktikabel.

Hingegen werden im DOD-Verfahren nur bei Bedarf Tröpfchen erzeugt, die sämtlich zum Aufbau des Formteils ortsselektiv abgeschieden werden, entweder indem ein Positionierroboter die Jetting-Düse in x,y,z-Richtung exakt positioniert, oder die Arbeitsebene entsprechend in x,y,z-Richtung verfahren wird; prinzipiell lassen sich beide Möglichkeiten auch simultan realisieren.

DE 10 2011 012 412 A1 und DE 10 2011 012 480 A1 beschreiben eine Vorrichtung sowie ein Verfahren zur schrittweisen Herstellung von 3D-Strukturen mit einer Druckkopfanordnung mit wenigstens zwei, vorzugsweise 50 bis 200 Druckkopfdüsen, welche das ortsselektive Aufbringen ggf. mehrerer photovernetzbarer Materialien mit unterschiedlicher Photoempfindlichkeit ermöglicht, wobei die photovernetzbaren Materialien anschließend ortsselektiv durch elektromagnetische Strahlung, insbesondere durch Zweiphotonen- oder Mehrphotonenprozesse im Fokusbereich eines Lasers, verfestigt werden. Das Aufbringen der photovernetzbaren Materialien mittels Inkjetdruck stellt an die Viskosität der photovernetzbaren Materialien spezielle Anforderungen. So zeichnen sich die photovernetzbaren Materialien durch eine Viskosität von weniger als 200 mPa.s, insbesondere weniger als 80 mPa.s, besonders bevorzugt weniger als 40 mPa.s aus. Um eine ausreichende Vernetzung des aufgebrachten Materials mittels Zwei- bzw. Mehrphotonenpolymerisation zu erzielen, bedarf es auf die Laserwellenlänge abgestimmter Photoinitiatoren und einer photovernetzbare Gruppen enthaltenden polymeren Vernetzer-Komponente, wobei die photovernetzbaren Gruppen der Klasse der Acrylate, Methacrylate, Acrylamide, Methylacrylamide, Urethanacrylate, Urethanmethacrylate, Ureaacrylate und Ureamethacrylate angehören. Das beschriebene Verfahren eignet sich jedoch nicht zur Herstellung von Formteilen bestehend aus Siliconelastomeren. Zum einen sind die verwendeten Photoinitiatoren, Photosensitizer, Coinitiatoren etc. in den (unpolaren) Siliconmassen nur schlecht löslich, was zu Trübungen, Mikrophasenseparation und Inhomogenitäten führt. Die radikalische Härtung von mit den voranstehend genannten photovernetzbaren Gruppen funktionalisierten Siliconen weist bekanntermaßen das Problem der durch Sauerstoff verursachten Inhibierung auf, wodurch die Vernetzungsgeschwindigkeit erheblich herabgesetzt wird und klebrige Oberflächen resultieren. Steuert man diesem Effekt durch Erhöhung der Funktionsdichte an z.B. Acrylatgruppen entgegen, resultieren nichtelastische, spröde Vulkanisate. Schließlich setzt die für eine Mehrphotonenpolymerisation (insbesondere bedingt durch die niedrige Funktionsdichte an photopolymerisierbaren Gruppen) benötigte, durch gepulste Femtosekundenlaser erzeugte extrem hohe lokale Photonendichte Zersetzungsreaktionen (Carbonisierung) im Silicon in Gang, was zu inakzeptablen Verfärbungen und Materialschädigungen führt.

Im DOD-Verfahren hängt die Auflösung struktureller Details des zu bildenden Formkörpers vor allem von der Größe der gejetteten Tröpfchen (Voxel) sowie deren ortsgenaue Aufbringung ab. Im Allgemeinen lassen sich mittels kleinerer Tröpfchen feinere strukturelle Details erzeugen. Da die Frequenz, mit welcher der Druckkopf die Tröpfchen erzeugt, begrenzt ist, führt die Verwendung kleinerer Tröpfchen jedoch zwangsläufig zu längeren Herstellungszeiten des Formteiles, so dass im Einzelfall ein Kompromiss zwischen Formgenauigkeit und Herstelldauer getroffen werden muss. Die Größe der Tröpfchen, die in weiten Grenzen durch geeignete Auslegung des Druckkopfes variiert werden kann, hängt jedoch maßgeblich von den rheologischen Eigenschaften der vernetzbaren Masse ab. Generell gilt, dass niedrigviskose Massen das Jetten kleinerer Tröpfchen mit höherer Frequenz erlauben, während höherviskose Massen die gegenwärtig verfügbaren Druckköpfe rasch an ihre Grenze bringen.

Eine genauere Betrachtung des DOD-Verfahrens zeigt, dass ein befriedigendes Druckbild (also ein formgenaues Elastomerteil) nur dann erhalten wird, wenn die technischen Parameter des Druckkopfes mit den insbesondere rheologischen Eigenschaften des zu druckenden Materials kompatibel sind. Wesentliche technische Parameter des Druckkopfes sind die Druckdifferenz zwischen Materialreservoir und Düsenausgang, der Düsendurchmesser sowie die Zeit, innerhalb derer die gesamte Menge eines Tropfens die Düse verlässt (ejection time). Als Druckköpfe kommen insbesondere (thermische) Bubble-Jet- und Piezo-Druckköpfe in Frage, wobei für den Druck von Elastomerteilen Piezo-Druckköpfe besonders bevorzugt sind, welche auch höherviskose Materialien jetten können. Diese sind kommerziell erhältlich (z.B. Druckköpfe der Firmen "NORDSON CORP./USA" und "VERMES MICRODISPENSING GMBH/Deutschland"). Diese Piezo-Druckköpfe ermöglichen einen Druckaufbau im kbar-Bereich, wodurch Flüssigkeitsmengen im pl- bis nl-Bereich innerhalb von 1-100 $\mu$s durch eine Düse mit Durchmessern zwischen 50 und 500 $\mu$m mit einer Geschwindigkeit von 1-100 m/s ausgestoßen werden können. Dieser Vorgang wiederholt sich mit einer Frequenz von bis zu einigen hundert Hz (dies sind typische Größenbereiche, die im Einzelfall erheblich abweichen können). Neben diesen technischen Parametern der Druckventile erweisen sich die rheologischen Eigenschaften des zu druckenden Materials als entscheidend. Auch wenn die Hersteller der Druckventile verarbeitbare Viskositäten von bis zu ca. 2 Mio. mPa.s (bei niedriger Scherrate) vorgeben, können derart hochviskose Materialien in der Regel nur bei extrem scherverdünnendem Verhalten gejettet werden. Scherverdünnendes Verhalten (*shear thinning*) bedeutet, dass die Viskosität des Materials mit zunehmender Scherrate abnimmt. Da beim Jetten mit Piezo-Druckköpfen außerordentlich hohe Scherraten zwischen $10^5$ und $10^6$ s$^{-1}$ in der Düse auftreten, kann scherverdünnendes Verhalten eine drastische Verringerung der Viskosität während des Jettens um mehrere Größenordnungen bewirken, wodurch ein Jetten erst möglich wird. Ist das scherverdünnende Verhalten des hochviskosen Materials zu niedrig, reicht die Energie des Piezo-Druckventils nicht aus, um das Material durch die Düse zu pressen und der Druckkopf blockiert (*blocking*). Es ist wichtig festzustellen, dass das Material die Düse nicht als fertiger Tropfen verlässt, sondern ein Tropfenbildungsvorgang abläuft. Das Material verlässt die Düse zunächst laminar strahlförmig, wobei sich rasch am Kopfende eine ovale Verdickung (Vorläufer des Haupttropfens) herausbildet, die jedoch noch über einen dünneren Materialfaden mit dem Düsenausgang verbunden bleibt. Nachfolgend sind vielfältige Szenarien möglich. Reißt der Materialfaden am Düsenausgang ab und vereinigt sich nachfolgend mit dem Haupttropfen, so entsteht ein einziger Tropfen, dessen Geschwindigkeit sich aufgrund des elastischen Vereinigungsvorgangs deutlich verlangsamt. Reißt der Materialfaden hingegen sowohl am Düsenausgang als auch am Haupttropfen ab, so kann sich durch elastisches Zusammenziehen ein zweiter Tropfen (Satellit) bilden. Satellit und Haupttropfen können nacheinander auf der Substratoberfläche (Arbeitsebene) auftreffen, können sich aber auch während der Flugphase noch zu einem einzigen Tropfen vereinen. Der abgerissene Materialfaden kann sich jedoch auch an mehreren Stellen verjüngen und schlussendlich mehrere Satellitentropfen bilden, die alle nacheinander auf dem Substrat auftreffen können oder sich noch während der Flugphase mit dem Haupttropfen vereinigen. Um Letzteres zu ermöglichen, ist ein bestimmter Mindestabstand des Düsenausgangs von der Arbeitsebene notwendig. Andererseits wird die ortsgenaue Deponierung des Tropfens mit zunehmender Flugdauer nachteilig beeinflusst, weshalb in der Praxis ein optimaler Abstand zwischen Düse und Substrat ausfindig gemacht werden muss, welcher typischerweise im Bereich einiger weniger Millimeter liegt.

Reißt der Materialfaden nicht unmittelbar am Düsenausgang ab (was maßgeblich von der zwischen Düsenmaterial und Druckmaterial bestehenden Grenzflächenspannung bestimmt wird), so zieht sich der am Düsenausgang verbliebene Teil des Materialfadens zusammen und verklebt in der Folge die Düse, was zum Ausfall des Druckkopfes führt. Bedenkt man des Weiteren, dass der Verfahrroboter, welcher den Druckkopf in der x,y-Ebene positioniert, die x, y-Ebene kontinuierlich abfährt (also ohne Halt an den einzelnen Punkten (x,y)), so wird verständlich, dass die Bildung von Satelliten zwangsläufig zu einem unscharfen Druckbild führt, da sich die Druckdüse bis zum Zeitpunkt des Abreißens des Materialfadens am Düsenausgang bereits in Richtung des nächsten (x,y) Punktes weiterbewegt hat (typische Geschwindigkeiten der Verfahreinheit liegen zwischen 0,1 und 1 m/s).

Der auf der Arbeitsebene mit hoher Geschwindigkeit auftreffende Tropfen kann sich ebenfalls auf unterschiedliche Weise verhalten. Er kann beispielsweise zu einem kugelsegment-, kegel- oder Donut-artigen Gebilde verformt werden, wobei die meist kreisförmige Grundfläche dieses Gebildes infolge des Auseinanderfließens des Tropfens einen größeren Durchmesser als die Düse bzw. des Tropfens aufweist. Der Tropfen kann beim Auftreffen auch ein kronenartiges Gebilde formen, welches unmittelbar anschließend winzige Tröpfchen in radialer Richtung verspritzt (splashing). Auch dieses Splashing führt zu einem unsauberen Druckbild. Der platzierte Tropfen kann infolge der extrem hohen Scherrate in der Düse infolge langsamer Relaxation eine noch sehr niedrige Viskosität aufweisen und zu stark auseinanderfließen. Andererseits kann eine zu schnelle Relaxation in die hohe Ausgangsviskosität bei Vorhandensein einer Fließgrenze zu spitzhütigen Tröpfchengebilden führen, die mangels einer ausreichenden Nivellierung eine raue Oberfläche bilden. Rheologisch dilatantes Verhalten des Tropfens kann sogar zu einem Rückprallen des aufgeschlagenen Tropfens führen. Aus dem Voranstehenden ist für den Fachmann ersichtlich, dass nur durch die genaue Abstimmung der technischen Parameter des Druckkopfes mit den rheologischen und Grenzflächeneigenschaften des Druckmaterials die Herstellung qualitativ hochwertiger Formartikel möglich ist. Im Fall der Herstellung von Formteilen ausgehend von Siliconkautschukzusammensetzungen mittels ballistischer 3D-Druckverfahren kommen einige zusätzlich erschwerende Randbedingungen hinzu. Die Herstellung von Siliconelastomeren mit guten mechanischen Eigenschaften (Reißfestigkeit, Dehnbarkeit, Weiterreißwiderstand etc.) ist nur möglich, wenn a) ausreichend lange Siliconpolymere (also mit ausreichend hohem Polymerisationsgrad bzw. Molekulargewicht) eingesetzt werden und b) zugleich aktiv verstärkende Füllstoffe (pyrogen erzeugte oder gefällte Kieselsäuren, Ruße etc.) in der Masse vorhanden sind. Beides führt unvermeidbar zu Siliconkautschukzusammensetzungen mit relativ hoher Viskosität, die der sauberen Tropfenbildung beim Jetten entgegensteht. Unter dem Terminus "relativ hohe Viskosität" soll hier ein Viskositätsbereich von 1.000 bis 300.000 mPa.s (jeweils bei 25°C und einer Scherrate von 0,5 s$^{-1}$ gemäß der in der Beschreibung offenbarten rheologischen Messmethode zur Bestimmung von $\eta_{MP1}$) verstanden werden. Derartige Viskositäten sind im Vergleich zu den Viskositäten der üblicherweise im Inkjet-Verfahren verarbeitbaren Materialien (Acrylate etc.) sehr hoch. Hingegen gilt dieser Viskositätsbereich innerhalb der Siliconkautschukzusammensetzungen als eher niedrig bis mittelviskos. Hochviskose Siliconkautschukmassen weisen typischerweise Viskositäten von ca. 300.000 mPa.s bis 10 kPa.s (jeweils bei 25°C und einer Scherrate von 0,5 s$^{-1}$ gemäß der in der Beschreibung offenbarten rheologischen Messmethode zur Bestimmung von $\eta_{MP1}$) auf. Mit zunehmender Viskosität wird das rasche Abreißen des Materialfadens am Düsenausgang erschwert, d.h., der Haupttropfen bleibt verhältnismäßig lange Zeit über den Materialfaden mit der Düse verbunden, während sich der Druckkopf permanent weiterbewegt. Zum anderen ist für die rasche Ausbildung eines diskreten Tropfens beim Jetten eine möglichst hohe Oberflächenspannung des Materials notwendig. Die Oberflächenspannung verursacht stets eine Minimierung der Oberfläche eines Gebildes, d.h., sie strebt eine Kugelgestalt an, was z.B. die Satellitenbildung und ein Splashing verhindern kann. Die Oberflächenspannung von Siliconen zählt jedoch zu den niedrigsten im Elastomerbereich (noch niedrigere Oberflächenspannungen weisen lediglich perfluorierte Kohlenwasserstoffe auf). Während wässrige Drucktinten eine hohe Oberflächenspannung von ca. 70 mN/m aufweisen, liegt diese bei Silicon-basierten Druckmaterialien lediglich bei ca. 20-25 mN/m. Aufgrund dieser Nachteile hinsichtlich Viskosität und Oberflächenspannung galt die Herstellung elastomerer Formkörper aus Siliconkautschukzusammensetzungen im DOD-Jetting-Verfahren bislang als nicht durchführbar. Tatsächlich wird diese Sichtweise auch durch zahlreiche wissenschaftliche Publikationen gestützt. Charakterisiert man die zu jettenden Materialien und Druckventile durch Eigenschaften, welche für die Verarbeitbarkeit maßgeblich sind, nämlich Düsendurchmesser, Ausstoßgeschwindigkeit, Tropfengeschwindigkeit, Tropfenvolumen, Dichte, Oberflächenspannung und Viskosität bei der Prozess-Scherrate, so lassen sich charakteristische dimensionslose Größen definieren, welche das Wechselspiel der beim Jetting auftretenden Trägheitskräfte, viskosen Kräfte, Oberflächenspannungen, Fließeigenschaften, Reibungskräfte etc. beschreiben. Zu diesen Größen gehören beispielsweise die Reynolds Zahl, die Ohnesorge Zahl, die Weber Zahl und die Z-Zahl. Anhand dieser Zahlen lassen sich Parameterbereiche ableiten, innerhalb derer ein Jetting (ohne Satellitenbildung, splashing, blocking etc.) möglich sein sollte (vgl. z.B. Brian Derby, Inkjet Printing of Functional and Structural Materials: Fluid Property Requirements, Feature Stability, and Resolution, Annu. Rev. Mater. Res. 2010. 40:395-414). Setzt man die typischen Eigenschaften von Siliconkautschukzusammensetzungen in diese Gleichungen ein, gelangt man unabhängig von der Wahl der technischen Parameter des Druckkopfes nicht in den für ein ordnungsgemäßes Jetting notwendigen Parameterbereich, was nahelegt, dass ein Jetting von Siliconkautschukzusammensetzungen, welches den Anforderungen eines DOD-3D-Drucks genügt, nicht möglich sein sollte.

Aufgabe der vorliegenden Erfindung war daher die Bereitstellung von Siliconkautschukzusammensetzungen, die den Anforderungen an Verarbeitungseigenschaften und -zeit für einen Einsatz in ballistischen generativen Verfahren (3D-Druck) genügen, und so eine qualitativ hochwertige, industrielle Erzeugung elastomerer Formkörper ermöglichen.

In umfangreichen Versuchen wurde überraschend festgestellt, dass die erfindungsgemäßen Siliconkautschukzusammensetzungen diese Aufgabe lösen, da sie besondere rheologische und Grenzflächeneigenschaften aufweisen und so eine Herstellung von elastomeren Formteilen mittels 3D-Druck im ballistischen DOD-Verfahren (Jetting) ermöglichen, mit denen Formteile in industrieller (d.h. vermarktungsfähiger) Qualität hergestellt werden.

## Die erfindungsgemäße Siliconkautschukzusammensetzung

Die erfindungsgemäßen Siliconkautschukzusammensetzungen für den 3D-Druck von Siliconformteilen im ballistischen generativen DOD-Verfahren enthalten:

(A) 50 bis 95 Gew.-% mindestens einer Organosiliciumverbindung mit mindestens zwei aliphatisch ungesättigten Gruppen pro Molekül,
(B) 1 bis 10 Gew.-% mindestens einer Organosiliciumverbindung mit mindestens zwei SiH-Gruppen pro Molekül, oder anstelle von (A) + (B) oder zusätzlich zu (A) und/ oder (B)
(G) 0-95 Gew.-% mindestens eine Organosiliciumverbindung mit mindestens zwei aliphatisch ungesättigten Gruppen und mindestens zwei SiH-Gruppen pro Molekül,
(C) 0,1 bis 500 Gew.-ppm mindestens eines Hydrosilylierungskatalysators bezogen auf den Gehalt des Metalls zur gesamten Siliconkautschukzusammensetzung,
(F) 0 bis 30 Gew.-% Hilfsstoffe die sich von (D) und (E) unterscheiden,

sowie

(D) 1 bis 50 Gew.-% mindestens eines aktiv verstärkenden Materials, in Kombination mit

(E) 0,01 bis 2 Gew.-% eines rheologischen Agens, welches polare Gruppen enthält und ausgewählt wird aus (E1), (E2) und (E3) sowie deren Mischungen

  (E1) Epoxygruppen-funktionellen Verbindungen,
  (E2) (Poly)ethergruppen-funktionellen Verbindungen,
  (E3) (Poly)estergruppen-funktionellen Verbindungen,
  wobei die Epoxy- und Ether- und Ester-Gruppen auch in einem einzigen Molekül vorhanden sein können,

dadurch gekennzeichnet, dass die Relaxationszeit $\tau$ der Siliconkautschukzusammensetzung im folgenden Bereich liegt

$$0 \text{ Sekunden} < \tau \leq 10 \text{ Sekunden,}$$

wobei sich $\tau$ aus Formel (III) ergibt:

$$\eta(t) = \eta_{max} + (\eta_0 - \eta_{max}) * EXP(-t/\tau), \qquad (III)$$

  wobei

- $\eta(t)$ die Viskosität zum Zeitpunkt t ist,
- $\eta_{max}$ die nach Wegfall der Scherung innerhalb einer vorgegebenen Zeit erzielte maximale Viskosität bezeichnet,
- $\eta_0$ die unmittelbar nach starker Scherung (also zum Zeitpunkt t=0) gemessene Viskosität ist, und
- EXP die e-Funktion bedeutet,

mit der Maßgabe, dass die Viskosität $\eta_{MP1}$ der Siliconkautschukzusammensetzung enthaltend alle Bestandteile außer Bestandteil (E) höchstens 300.000 mPa.s beträgt,
wobei die Viskositätsmessung zur Bestimmung der Relaxationszeit $\tau$ sowie der Viskosität $\eta_{MP1}$ gemäß der in der Beschreibung offenbarten rheologischen Messmethode erfolgt.

$\eta_{MP1}$ beträgt vorzugsweise mindestens 1.000 mPa.s, insbesondere mindestens 10.000 mPa.s, ganz besonders bevorzugt mindestens 50.000 mPa.s; sowie höchstens 300.000 mPa.s, insbesondere höchstens 250.000 mPa.s und ganz besonders bevorzugt höchstens 200.000 mPa.s.

**Bestandteil (A)** der erfindungsgemäßen Siliconkautschukzusammensetzungen ist eine mindestens zwei aliphatische Kohlenstoff-Kohlenstoff-Mehrfachbindungen aufweisende Organosiliciumverbindung, vorzugsweise lineare oder verzweigte Polyorganosiloxane aus Einheiten der Formel (I):

$$R_aR^1_bSiO_{(4-a-b)/2} \qquad (I),$$

wobei

R gleich oder verschieden sein kann und einen von aliphatischen Kohlenstoff-Kohlenstoff-Mehrfachbindungen freien, ggf. halogensubstituierten, gegebenenfalls O-, N-, S- oder P-Atome enthaltenden $C_1$-$C_{20}$-Rest bedeutet,
$R^1$ gleich oder verschieden sein kann und einen einwertigen, gegebenenfalls substituierten organischen Rest mit aliphatischer Kohlenstoff-Kohlenstoff-Mehrfachbindung bedeutet, a 0, 1, 2 oder 3 ist und
b 0, 1 oder 2 ist
mit der Maßgabe, dass a + b < 4 ist und mindestens 2 Reste $R^1$ pro Molekül vorliegen.

Bei Rest R kann es sich um ein- oder mehrwertige Reste handeln, wobei die mehrwertigen Reste, wie bivalente, trivalente und tetravalente Reste, dann mehrere, wie etwa zwei, drei oder vier Siloxy-Einheiten der Formel (I) miteinander verbinden.
Vorzugsweise sind die Reste R über ein Kohlenstoff- oder Sauerstoffatom am Silicium gebunden. Beispiele für SiCgebundene Reste R sind Alkylreste (z.B. Methyl-, Ethyl-, Octyl- und Octadecylrest), Cycloalkylreste (z.B. Cyclopentyl-, Cyclohexyl- und Methylcyclohexylrest), Arylreste (z.B. Phenyl- und Naphthylrest), Alkarylreste (z.B. Tolyl- und Xylylrest) und Aralkylreste (z.B. Benzyl- und beta-Phenylethylrest). Beispiele für substituierte Reste R sind 3,3,3-Trifluor-n-propyl-, p-Chlorphenyl-, Chlormethyl-, Glycidoxypropyl- und $-(CH_2)_n-(OCH_2CH_2)_m-OCH_3$., wobei n und m gleiche oder verschiedene ganze Zahlen zwischen 0 und 10 sind. Beispiele für SiO-gebundene Reste R sind Alkoxygruppen (z.B. Methoxy-, Ethoxy-, iso-Propoxy- und tert.-Butoxyreste) und der p-Nitrophenoxyrest.

Bei Rest $R^1$ kann es sich um beliebige, einer Anlagerungsreaktion (Hydrosilylierung) mit einer SiHfunktionellen Verbindung zugängliche Gruppen handeln. Bevorzugt handelt es sich bei Rest $R^1$ um Alkenyl- und Alkinylgruppen mit 2 bis 16 C-Atomen, wie Vinyl-, Allyl-, Methallyl-, 1-Propenyl-, 5-Hexenyl-, Ethinyl-, Butadienyl-, Hexadienyl, Undecenyl, Cyclopentenyl-, Cyclopentadienyl-, Norbornenyl- und Styrylrest, wobei Vinyl-, Allyl- und Hexenylreste besonders bevorzugt sind. Falls es sich bei Rest $R^1$ um substituierte aliphatisch ungesättigte Gruppen handelt, sind als Substituenten Halogenatome, Cyano- und Alkoxygruppen bevorzugt. Beispiele für substituierte Reste $R^1$ sind Allyloxypropyl- und der Isopropenyloxyrest.

Bevorzugt als Bestandteil (A) ist die Verwendung vinylfunktioneller, im Wesentlichen linearer Polydiorganosiloxane mit einer Viskosität von 10 bis 500.000 mPa.s, besonders bevorzugt zwischen 100 und 50.000 mPa.s. Bestandteil (A) kann eine Mischung unterschiedlicher siliciumorganischer Verbindungen der oben beschriebenen Art sein.

Der Gehalt der erfindungsgemäßen Siliconkautschukzusammensetzung an Bestandteil (A) beträgt 50 bis 95 Gew.-%, bevorzugt 70 bis 90 Gew.-%, besonders bevorzugt 65 bis 80 Gew.-%.

**Bestandteil (B)** ist eine beliebige SiH-funktionelle siliciumorganische Verbindung mit durchschnittlich mindestens zwei SiH-Gruppen. Bestandteil (B) fungiert als Vernetzer der Siliconkautschukzusammensetzung. Bestandteil (B) kann auch eine Mischung verschiedener SiH-funktioneller siliciumorganischer Verbindungen sein. Vorzugsweise stellt Bestandteil (B) lineare, cyclische, verzweigte oder harzartige Polyorganosiloxane mit Si-gebundenen Wasserstoffatomen dar, welche aus Einheiten der Formel (II)

$$R_cH_dSiO_{(4-c-d)/2} \qquad (II)$$

zusammengesetzt sind, wobei

R gleich oder verschieden sein kann und die oben gegebene Bedeutung hat,
c 0, 1, 2 oder 3 ist und
d 0, 1 oder 2 ist,
mit der Maßgabe, dass die Summe von (c+d) kleiner oder gleich 3 ist und durchschnittlich mindestens zwei Si-gebundene Wasserstoffatome je Molekül vorhanden sind.

Vorzugsweise enthält Bestandteil (B) Si-gebundenen Wasserstoff im Bereich von 0,04 bis 1,7 Gewichtsprozent (Gew.-%) bezogen auf das Gesamtgewicht des Organopolysiloxans (B). Das Molekulargewicht des Bestandteils (B) kann in weiten Grenzen variieren, etwa zwischen $10^2$ und $10^6$ g/mol. So kann es sich bei dem Bestandteil (B) beispielsweise um ein relativ niedrigmolekulares SiH-funktionelles Oligosiloxan, wie Tetramethyldisiloxan, handeln, jedoch auch um kettenständige oder endständige SiH-Gruppen verfügendes hochpolymeres Polydimethylsiloxan oder ein SiH-Gruppen aufweisendes Siliconharz. Bevorzugt ist die Verwendung niedermolekularer SiH-funktioneller Verbindungen, wie Tetrakis(dimethylsiloxy)silan und Tetramethylcyclotetrasiloxan, SiH-haltiger Siloxane, wie Poly(hydrogenmethyl)siloxan und Poly(dimethyl-hydrogenmethyl)siloxan mit einer Viskosität von 10 bis 1.000 mPa.s (bei 25°C und 0,8 sec$^{-1}$). Bevorzugt sind Bestandteile (B), welche mit dem Bestandteil (A) verträglich (homogen mischbar oder zumindest emulgierbar) sind. Je nach Art des Bestandteils (A) kann es daher erforderlich sein, Bestandteil (B) geeignet zu substituieren, z.B. indem ein Teil der Methylgruppen durch 3,3,3-Trifluorpropyl- oder Phenylgruppen ersetzt wird.

Bestandteil (B) kann einzeln oder als Mischung aus mindestens zwei verschiedenen (B) eingesetzt werden und ist vorzugsweise in einer solchen Menge in der erfindungsgemäßen Siliconkautschukzusammensetzung enthalten, dass das Molverhältnis von SiH-Gruppen zu aliphatisch ungesättigten Gruppen bei 0,1 bis 20, bevorzugt zwischen 0,5 und 5, besonders bevorzugt zwischen 1 und 3 liegt. Der Gehalt der erfindungsgemäßen Siliconkautschukzusammensetzung an Bestandteil (B) beträgt 0,1 bis 15 Gew.-%, bevorzugt 0,5-10 Gew.-%, besonders bevorzugt 2-5 Gew.-%.

**Bestandteil (G)** kann anstelle von (A)+(B) oder zusätzlich zu (A) und/oder (B) eingesetzt werden. In den erfindungsgemäßen additionsvernetzenden Zusammensetzungen sind also folgende Kombinationen möglich: (A)+(B) oder (A)+(G) oder (B)+(G) oder (A)+(B)+(G) oder (G) alleine. (G) ist eine Organosiliciumverbindung mit mindestens zwei aliphatisch ungesättigten Gruppen und mindestens zwei SiH-Gruppen pro Molekül und kann somit mit sich selbst vernetzen. Verbindungen (G) sind dem Fachmann aus dem Stand der Technik allgemein bekannt. Falls Verbindungen (G) eingesetzt werden, handelt es sich vorzugsweise um solche aus Einheiten der allgemeinen Formeln

$$R^7_kSiO_{(4-k)/2} \text{ (VI)}, \quad R^7_mR^6SiO_{(3-m)/2} \text{ (VII)} \text{ und } R^7_oHSiO_{(3-o)/2} \qquad (VIII),$$

wobei

$R^7$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und

$R^6$ einen einwertigen Kohlenwasserstoffrest mit terminaler, aliphatischer Kohlenstoff-Kohlenstoff-Mehrfachbindung mit 2 bis 8 Kohlenstoffatomen je Rest,

k 0, 1, 2 oder 3,

m 0, 1 oder 2,

o 0, 1 oder 2,

bedeuten,

mit der Maßgabe, dass in (G) durchschnittlich mindestens 2 Reste $R^6$ und zugleich durchschnittlich mindestens 2 Si-gebundene Wasserstoffatome vorliegen.

Es kann eine einzelne Verbindung (G) oder eine Mischung aus mindestens zwei Verbindungen (G) eingesetzt werden.

Der Gehalt der erfindungsgemäßen Siliconkautschukzusammensetzung an Bestandteil (G) beträgt 0 - 95 Gew.-%, bevorzugt 0-50 Gew.-%, besonders bevorzugt 0-10 Gew.-%.

**Bestandteil (C)** dient als Katalysator für die Additionsreaktion (Hydrosilylierung) zwischen den aliphatisch ungesättigten Gruppen des Bestandteils (A) und den siliciumgebundenen Wasserstoffatomen des Bestandteils (B) bzw. (G). Prinzipiell können alle üblicherweise in additionsvernetzenden Siliconkautschukzusammensetzungen eingesetzten Hydrosilylierungskatalysatoren verwendet werden. Die Anlagerung von Si-gebundenem Wasserstoff an aliphatische Mehrfachbindung fördernde Katalysatoren (C) sind beispielsweise Platin, Rhodium, Ruthenium, Palladium, Osmium oder Iridium, eine metallorganische Verbindung oder eine Kombination davon. Beispiele für solche Katalysatoren (C) sind metallisches und feinverteiltes Platin, das sich auf Trägern, wie Siliciumdioxid, Aluminiumoxyd oder Aktivkohle befinden kann, Verbindungen oder Komplexe von Platin, wie Platinhalogenide, z. B. $PtCl_4$, $H_2PtCl_6 \cdot 6H_2O$, $Na_2PtCl_4 \cdot 4H_2O$, Platinacetylacetonat und Komplexe der besagten Verbindungen, die in einer Matrix oder einer kernschalenartigen Struktur eingekapselt sind, Platin-Olefin-Komplexe, Platin-Phosphit-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinyl-Siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe, Trimethyl-cyclopentadienyl-platin(IV), Trimethyl[(3-trimethoxysilyl)propyl-cyclopentadienyl]-platin(IV).

Die aufgeführten Hydrosilylierungskatalysatoren ermöglichen in der Regel selbst bei Raumtemperatur eine rasche Vernetzung der Siliconkautschukzusammensetzung. Da die Hydrosilylierungsreaktion sofort nach Vermischen aller Bestandteile einsetzt, werden additionsvernetzende Massen meist in Form von mindestens zwei Komponenten formuliert, wobei eine Komponente A den Platinkatalysator (C) und eine andere Komponente B den Vernetzer (B) oder (G) enthält. Um auch nach Vermischen der beiden Komponenten eine ausreichende Verarbeitungszeit zur Verfügung zu haben, werden meist Inhibitoren zugesetzt, welche das Einsetzen der Vernetzungsreaktion hinauszögern. Durch Zufuhr von Wärme kann dann eine rasche Vernetzung herbeigeführt werden. Für die Verwendung additionsvernetzender Massen im 3D-Druck-Verfahren sind jedoch solche Hydrosilylierungskatalysatoren bevorzugt, welche thermisch schlecht, jedoch durch energiereiche Strahlung (UV, UV-VIS) sehr leicht aktiviert werden können, d.h., die deponierte Siliconkautschukzusammensetzung wird nicht thermisch, sondern vorzugsweise durch UV- oder UV-VIS-Strahlung initiiert vernetzt. Dies erfolgt beispielsweise entweder über einen aktivierbaren Hydrosilylierungskatalysator oder über einen deaktivierbaren zusätzlich enthaltenen Inhibitor (F). Gegenüber einer thermischen Vernetzung hat die UV-oder UV-VISinduzierte Vernetzung zahlreiche Vorteile. Zum einen können Intensität, Einwirkungszeit und Einwirkungsort der UV-Strahlung genau bemessen werden, während das Aufheizen der tropfenweise abgeschiedenen Siliconkautschukzusammensetzung (wie auch deren anschließendes Abkühlen) durch die relativ geringe thermische Leitfähigkeit stets verzögert erfolgt. Aufgrund des intrinsisch sehr hohen thermischen Ausdehnungskoeffizienten der Silicone führen die bei der thermischen Vernetzung zwangsläufig vorhandenen Temperaturgradienten zu mechanischen Spannungen, welche die Maßhaltigkeit des gebildeten Formteils negativ beeinflussen, was im Extremfall zu inakzeptablen Formverzerrungen führen kann. Ein weiterer Vorteil der UV/VISinduzierten Additionsvernetzung zeigt sich bei der Herstellung von Mehrkomponentenformteilen, wie beispielsweise Hart-Weichverbunden, die neben dem Siliconelastomer einen Thermoplasten enthalten, dessen thermisch bedingter Verzug vermieden wird.

UV/VIS-induzierte additionsvernetzende Siliconkautschukzusammensetzungen sind dem Fachmann im Allgemeinen bekannt und werden beispielsweise in DE 10 2008 000 156 A1, DE 10 2008 043 316 A1, DE 10 2009 002 231 A1, DE 10 2009 027 486 A1, DE 10 2010 043 149 A1 und WO 2009/027133 A2 beschrieben. Die Vernetzung kommt durch UV/VIS-induzierte Aktivierung eines lichtempfindlichen Hydrosilylierungskatalysators (C) zustande, wobei Komplexe des Platins bevorzugt sind. In der Fachliteratur werden zahlreiche durch Licht aktivierbare Platinkatalysatoren beschrieben, die unter Lichtausschluss weitgehend inaktiv sind und durch Bestrahlung mit Licht mit einer Wellenlänge von 250-500 nm in bei Raumtemperatur aktive Platinkatalysatoren überführt werden können. Beispiele hierfür sind ($\eta$-Diolefin)($\sigma$-aryl)-Platinkomplexe (EP 0 122 008 A1; EP 0 561 919 B1), Pt(II)-$\beta$-diketonatkomplexe (EP 0 398 701 B1) und ($\eta^5$-Cyclopentadienyl)tri($\sigma$-alkyl)Platin(IV)-Komplexe (EP 0 146 307 B1, EP 0 358 452 B1, EP 0 561 893 B1). Besonders bevorzugt sind MeCpPtMe$_3$ sowie die sich davon durch Substitution der am Platin befindlichen Gruppen ableitende Komplexe wie beispielsweise beschrieben in EP 1 050 538 B1 und EP 1 803 728 B1.

Die UV- oder UV-VIS-induziert vernetzenden Massen können ein- oder mehrkomponentig formuliert werden.

Die Geschwindigkeit der UV/VIS-induzierten Additionsvernetzung hängt von zahlreichen Faktoren ab, insbesondere von der Art und Konzentration des PlatinKatalysators, von der Intensität, Wellenlänge und Einwirkungszeit der UV/VIS-Strahlung, der Transparenz, Reflektivität, Schichtdicke und Zusammensetzung der Siliconkautschukzusammensetzung und der Temperatur. Für die Aktivierung der UV/VIS-induzierten additionsvernetzenden Siliconkautschukzusammensetzung wird Licht der Wellenlänge 240-500 nm, bevorzugt 300-450 nm, besonders bevorzugt 350-400 nm eingesetzt. Um eine rasche Vernetzung zu erzielen, worunter eine Vernetzungszeit bei Raumtemperatur von weniger als 20 min, vorzugsweise weniger als 10 min, besonders bevorzugt weniger als 1 min. verstanden werden soll, empfiehlt sich die Verwendung einer UV/VIS-Strahlungsquelle mit einer Leistung zwischen 10 mW/cm$^2$ und 15.000 mW/cm$^2$, sowie eine Strahlungsdosis zwischen 150 mJ/cm$^2$ und 20.000 mJ/cm$^2$, bevorzugt zwischen 500 mJ/cm$^2$ und 10.000 mJ/cm$^2$. Im Rahmen dieser Leistungs- und Dosis-Werte lassen sich flächenspezifische Bestrahlungszeiten zwischen maximal 2.000 s/cm$^2$ und minimal 8 ms/cm$^2$ realisieren. Es können mehrere, auch unterschiedliche Strahlungsquellen verwendet werden.

Der Hydrosilylierungskatalysator sollte vorzugsweise in einer katalytisch ausreichenden Menge eingesetzt werden, so dass eine hinreichend schnelle Vernetzung bei Raumtemperatur ermöglicht wird. Typischerweise werden 0,1 bis 500 Gew.-ppm des Katalysators bezogen auf den Gehalt des Metalls zur gesamten Siliconkautschukzusammensetzung verwendet, vorzugsweise 0,5-200 Gew.-ppm, besonders bevorzugt 1-50 Gew.-ppm. Es können auch Mischungen unterschiedliche Hydrosilylierungskatalysatoren verwendet werden.

**Bestandteil (D)**

Unter dem Begriff "aktiv verstärkendes Material" oder synonym "verstärkendes Material" wird im Rahmen dieser Erfindung ein (aktiv) verstärkender Füllstoff verstanden. Im Vergleich zu (inaktiven) nicht-verstärkenden Füllstoffen verbessern aktiv verstärkende Füllstoffe die mechanischen Eigenschaften der Elastomere, in denen sie eingesetzt werden. Inaktive Füllstoffe wirken dagegen als Streckmittel und verdünnen das Elastomer. Die Begriffe "aktiv verstärkendes Material", "aktiv verstärkender Füllstoff", "verstärkendes Material" und "verstärkender Füllstoff" werden im Rahmen der vorliegenden Erfindung synonym verwendet.

Bestandteil (D) ist notwendig, um eine ausreichende mechanische Festigkeit des Siliconelastomers zu erzielen. Unter mechanischer Festigkeit wird die Gesamtheit der für Elastomere typischen Eigenschaften verstanden, insbesondere Härte, Reißdehnung, Reißfestigkeit und Weiterreißwiderstand. Um diesbezüglich ansprechende Eigenschaften zu erzielen ist der Zusatz aktiv verstärkender Materialien unverzichtbar. Hierzu zählen vor allem

(D1) feinteilige, partikuläre Materialien wie pyrogen erzeugte oder gefällte Kieselsäuren, Titandioxide, Aluminiumoxide, gefällte Kieselsäuren, Aerogele und Ruße mit einer hohen spezifischen Oberfläche zwischen 50 und 1000 m$^2$/g (gemessen nach der BET-Methode nach DIN 66131 und DIN 66132),

(D2) Nanopartikel (beispielsweise SiO$_2$, TiO$_2$, exfolierte Schichtsilikate, Kohlenstoff-Nanoröhrchen etc.).

Bevorzugt wird (D1) als verstärkender Füllstoff eingesetzt. Besonders wirksames und bevorzugtes Verstärkungsmittel (D1) ist die pyrogen (z.B. durch Reaktion von Siliziumhalogenverbindungen in einer Wasserstoff-Sauerstoff-Flamme) hergestellte Kieselsäure (*fumed silica*) oder die gefällte Kieselsäure.

Pyrogen hergestellte Kieselsäure ist aufgrund der auf ihrer Oberfläche befindlichen Silanolgruppen (-SiOH) hydrophil. Es ist jedoch üblich und bevorzugt, hydrophobe Kieselsäuren in Siliconkautschukzusammensetzungen zu verwenden, um höhere Füllstoffgehalte (und damit bessere mechanische Eigenschaften) ohne übermäßigen Viskositätsanstieg und ohne Phaseninversion zu erzielen. Zudem wird das Vermischen der Siliconbestandteile und der Kieselsäure durch den hydrophoben Charakter wesentlich erleichtert. Die Hydrophobierung der Kieselsäure, die hauptsächlich durch Silylierung erfolgt, ist dem Fachmann bekannt und beispielsweise in den Offenlegungsschriften EP 686676 B1, EP 1433749 A1 und DE 102013226494 A1 beschrieben. Infolge der Hydrophobierung (Silylierung) der Kieselsäureoberfläche verringert sich die Silanolgruppendichte typischerweise von 1,8 bis 2,5 SiOH/nm$^2$ auf kleiner 1,8 bis kleiner 0,9 Silanolgruppen pro nm$^2$ (bestimmt mittels Säure-Base-Titration wie gegeben in G. W. Sears, Anal. Chem. 1956, 28, 1981). Gleichzeitig erhöht sich der Kohlenstoffgehalt der Kieselsäure auf 0,4 bis 15 Gew,-% Kohlenstoff (bestimmt mittels Elementaranalyse), wobei das Gewicht auf die hydrophobe Kieselsäure bezogen ist.

Die Verwendung von Verstärkungsmitteln (D2) ist möglich, jedoch nicht bevorzugt, weil nicht praktikabel im industriellen Maßstab. Aufgrund der sehr geringen intermolekularen Wechselwirkungen zwischen Siliconen, erweist sich die Herstellung echter nanopartikulärer Siliconkautschukzusammensetzungen als sehr schwierig. Meist erfolgt rasche Re-Agglomerierung der Nanopartikel oder es kommt zu keiner Exfolierung bzw. Intercalation von Schichtsilikaten im Silicon. Es können auch mehrere unterschiedliche Verstärkungsmittel (D) verwendet werden.

Der Gehalt an Verstärkungsmittel (D) bezogen auf die gesamte vernetzbare Siliconkautschukzusammensetzung liegt zwischen 1 und 50 Gew.-%, vorzugsweise zwischen 5 und 30 Gew.-%, besonders bevorzugt zwischen 10 und 25 Gew.-%.

**Bestandteil (E)** der erfindungsgemäßen Siliconkautschukzusammensetzung ist ein rheologisches Agens, welches der Einstellung des scherverdünnenden und thixotropen Verhaltens dient. Unter scherverdünnendem Verhalten wird hier die Abnahme der Viskosität mit zunehmender Scherrate verstanden. Thixotropes Verhalten ist der Grad und die Schnelligkeit der Viskositätserholung, mit welcher das Material versucht, nach Wegfall der Scherung in den Viskositätsausgangszustand zurückzukehren. Scherverdünnendes, strukturviskoses Verhalten wird vor allem durch zumindest teilweise reversible Strukturveränderungen im Material infolge der Scherkräfte verursacht. Beispielsweise können physikalische Partikel-Partikel-Netzwerke durch Scherkräfte aufgebrochen werden, wodurch das zuvor in diesem Netzwerk immobilisierte Polymer fließfähig wird und die Viskosität des Materials sinkt. Im Ruhezustand kann dieses Netzwerk oftmals wieder zurückgebildet werden (thixotropes Verhalten).

Dem Bestandteil (E) kommt für ein qualitativ hochwertiges Druckbild bei der ballistischen Deponierung von Siliconkautschukzusammensetzungen entscheidende Bedeutung zu. Bestandteil (E) bewirkt einen hinreichend schnellen Viskositätsaufbau des deponierten Tröpfchens und verhindert dadurch ein übermäßiges Auseinanderfließen (Spreiten) sowie ein Verspritzen (Splashing). Zudem erzeugt Bestandteil (E) eine Fließgrenze, wodurch die deponierte Siliconkautschukzusammensetzung eine ausreichende Grünfestigkeit erlangt, die den Druck feiner struktureller Details ermöglicht und es bis zu einem gewissen Grad erlaubt, auf das zusätzliche Deponieren von Stützstrukturen zu verzichten.

Die Zugabe des Bestandteils (E) zur nichterfindungsgemäßen (E)-freien Siliconkautschukzusammensetzung, welche der erfindungsgemäßen Siliconkautschukzusammensetzung zugrunde liegt, bewirkt einen erheblichen Anstieg der Ruheviskosität $\eta_{MP1}$ der Masse, so dass die erfindungsgemäßen Siliconkautschukzusammensetzungen Viskositäten von deutlich > 300.000 mPa.s aufweisen, teils > 1kPa.s (gemessen mit der in der Beschreibung offenbarten rheologischen Messmethode). Trotz dieses erheblichen Viskositätsanstiegs können die den Bestandteil (E) enthaltenden erfindungsgemäßen Siliconkautschukzusammensetzungen problemlos gejettet werden und führen zu einem sauberen Druckbild. Ersteres infolge der scherverdünnenden Wirkung von (E), Letzteres infolge der durch (E) verkürzten Relaxationszeit des gejetteten Tröpfchens.

Die Wirksamkeit des rheologischen Agens (E) ist an das Vorhandensein des Bestandteils (D) gebunden. Obgleich der Bestandteil (D) auch ohne Bestandteil (E) bereits einen gewissen Grad an scherverdünnendem und thixotropem Verhalten verursachen kann, führt erst die Kombination mit (E) zu einem ausreichenden Maß an Scherverdünnung und Thixotropie, welches für das Jetting und das ortsgenaue Deponieren der Siliconkautschukzusammensetzung erforderlich ist. Da die in der Siliconkautschukzusammensetzung dispergierten (Partikelartigen) Bestandteile (D) vornehmlich durch schwache physikalische Wechselwirkungen (z.B. LONDON-Kräfte) mit den Siliconbestandteilen (A) und (B) und (G) interagieren, wird über die Partikel-Silicon-Partikel-Wechselwirkungen ein nur schwaches Netzwerk gebildet, welches zwar leicht durch Scherung zerstört werden kann (Scherverdünnung), aber im nachfolgenden Ruhezustand auch nur sehr langsam in die Ausgangsviskosität zurückkehrt, was letztlich zu einem Zerfließen des deponierten Tröpfchens führt und damit zu einem unsauberen Druckbild. Hingegen handelt es sich bei dem Bestandteil (E) um ein polare Gruppen enthaltendes Agens, welches wesentlich stärkere physikalische Wechselwirkungen mit den Partikeln des Bestandteils (D) aufbaut, was zur Folge hat, dass die Partikel-(E)-Partikel-Bindungen fester sind (höhere Ruheviskosität, höhere Fließgrenze), eine stärkere Scherverdünnung auftritt, und vor allem ein wesentlich schnellerer Wiederaufbau der Viskosität im Ruhezustand erfolgt, d.h., der ortsselektiv deponierte Tropfen nur marginal in die Umgebung spreiten kann. Dieser Effekt des Bestandteils (E) zu Bestandteil (D) in der erfindungsgemäßen Siliconkautschukzusammensetzung lässt sich mittels der sogenannten Relaxationszeit $\tau$ charakterisieren und quantifizieren, wobei sich $\tau$ aus Formel (III) ergibt:

$$\eta(t) = \eta_{max} + (\eta_0 - \eta_{max}) * EXP(-t/\tau),        (III)$$

wobei $\eta(t)$ die Viskosität zum Zeitpunkt t ist,
$\eta_{max}$ die nach Wegfall der Scherung innerhalb einer vorgegebenen Zeit erzielte maximale Viskosität bezeichnet,
$\eta_0$ die unmittelbar nach starker Scherung (also zum Zeitpunkt t=0) gemessene Viskosität ist und
EXP die e-Funktion bedeutet.

Die so definierte Relaxationszeit $\tau$ beschreibt, wie schnell sich die Viskosität einer stark gescherten Masse erholt, wenn die Scherung abgestellt wird. Große Werte $\tau$ bedeuten eine langsame Viskositätserholung, kleine Werte ein schnelles Relaxieren. In umfangreichen Versuchen anhand unterschiedlicher Siliconkautschukzusammensetzungen wurde gefunden, dass nur jene Siliconkautschukzusammensetzungen zu einem saubereren Druckbild führen, deren Relaxationszeit $\tau$ höchstens 10 Sekunden beträgt, bevorzugt maximal 7, besonders bevorzugt maximal 5 Sekunden. Es zeigt sich, dass nicht erfindungsgemäße Siliconkautschukzusammensetzungen mit Relaxationszeiten > 10 Sekunden stets zu einem unsauberen Druckbild führen (z.B. unzureichende Kantenschärfe, verwischte Strukturdetails etc.). Dem Fachmann ist klar, dass aus physikalischen Gründen für die Relaxationszeit $\tau > 0$ gelten muss. Extrem kurze Relaxationszeiten (nahe Null) sind zudem meist nicht erwünscht, da in diesem Fall der Viskositätsaufbau des deponierten Tröpfchens derart schnell erfolgt, dass eine Nivellierung (Abrundung) der Tröpfchen nicht mehr möglich ist, was z.B. kegelförmige Tröpfchen und letztlich raue Oberflächen zur Folge haben kann. Unter Umständen kann dieser Effekt jedoch auch gewünscht sein (z.B. um matte Oberflächen zu generieren).

Der Effekt des Bestandteils (E) auf die Relaxationszeit $\tau$ der Siliconkautschukzusammensetzung ist vor allem abhängig von der chemischen Zusammensetzung von (E), dem Gehalt an (E) sowie Art und Gehalt an Verstärkungsmittel (D). Zu hohe Anteile an (E) haben jedoch negative Einflüsse auf andere Eigenschaften der Siliconkautschukzusammensetzung bzw. des daraus erhältlichen Formkörpers. Daher darf (E) zu maximal 2 Gew.-% in der Siliconkautschukzusammensetzung enthalten sein (bezogen auf die gesamte Siliconkautschukzusammensetzung) und dabei eine Relaxationszeit $\tau$ von maximal 10 Sekunden erzielen. Vorzugsweise ist (E) maximal mit 1 Gew.-%, besonders bevorzugt mit maximal 0,5 Gew.-% enthalten. Erfindungsgemäße rheologische Additive (E) werden vorzugsweise aus folgender Gruppe ausgewählt

(E1) Epoxygruppen-funktionellen Verbindungen,
(E2) (Poly)ethergruppen-funktionellen Verbindungen und
(E3) (Poly)estergruppen-funktionellen Verbindungen

wobei die Epoxy- und Ether- und Ester-Gruppen auch in einem einzigen Molekül vorhanden sein können. Der Terminus "funktionell" bezieht sich auf eine stärkere Wechselwirkung zwischen der betreffenden Gruppe aus (E) und dem Bestandteil (D) im Vergleich zur Wechselwirkung zwischen Silicon und (D). Diese stärkere Wechselwirkung umfasst vor allem Wasserstoffbrücken-Wechselwirkungen und polare Wechselwirkungen vom Debye- und Keesom-Typ. Die verstärkte Wechselwirkung von (E) mit (D) bewirkt die Ausbildung physikalischer (D)-(E)-(D)-Brücken, was zu einer netzwerkartigen Strukturierung der Siliconkautschukzusammensetzung führt, welche die Fließfähigkeit der Siliconbestandteile (A) und (B) sowie ggf. (G) vermindert (Fließgrenze, hohe Ruheviskosität). Unter Schereinwirkung erfolgt Destrukturierung dieses Netzwerkes erkennbar an einer starken Scherverdünnung. Nach Wegfall der Scherung verursacht die stärkere Wechselwirkung des rheologischen Agens (E) mit (D) den raschen Wiederaufbau der Netzwerkstruktur verbunden mit einer Viskositätszunahme und Ausbildung einer Fließgrenze.

Im Folgenden soll die Wirkungsweise der Bestandteile (D) und (E) erläutert werden und ein Weg aufgezeigt werden, wie die Relaxationszeit $\tau$ sowie die Ruheviskosität $\eta_{MP1}$ gezielt eingestellt werden können.

Wie bereits erwähnt, ist die Wirksamkeit des Bestandteils (E) an das Vorhandensein des Bestandteils (D) gebunden. (D) stellt einen verstärkenden Füllstoff dar, welcher für die Erzielung einer ausreichenden mechanischen Festigkeit der vernetzten Siliconzusammensetzung notwendig ist. Typischerweise und bevorzugt werden hierfür feinteilige Kieselsäuren eingesetzt.

Der verstärkende Füllstoff (D) besteht aus flächig über kovalente Bindungen miteinander verwachsenen Primärpartikeln, den sogenannten Aggregaten, welche wiederum durch physikalische Wechselwirkungen (Wasserstoffbrücken, Van-der-Waals-Wechselwirkungen) zu Agglomeraten zusammengelagert sind. Während die Aggregate beim Vermischen mit dem Silicon strukturell erhalten bleiben, können die zu den Agglomeraten führenden physikalischen Wechselwirkungen überwunden werden, was letztlich dazu führt, dass die Agglomerate aufgebrochen werden und die Aggregate fein verteilt (dispergiert) in der Siliconmatrix vorliegen.

Der verstärkende Füllstoff (D) weist typischerweise eine hohe Oberflächenenergie auf. Zum Beispiel beträgt diese bei hydrophilen Kieselsäuren infolge der zahlreichen auf der Oberfläche befindlichen Silanolgruppen ca. 70 mJ/m$^2$. Die hohe Oberflächenenergie steht einer guten Dispergierung der Aggregate im Silicon durch die relativ starken Aggregat-Aggregat-Wechselwirkungen entgegen, was zur Folge hat, dass beim Vermischen zunächst lediglich die Agglomerate mit dem Silicon benetzt werden, ohne diese zu isolierten Aggregaten aufzuschließen.

Die hohe Oberflächenenergie des Füllstoffs bedingt zudem relativ starke Wechselwirkungen mit den Siliconbestandteilen, so dass Letztere an der Füllstoffoberfläche immobilisiert werden, wodurch deren Beweglichkeit vermindert wird, was einen Viskositätsanstieg der Siliconzusammensetzung zur Folge hat.

Die hohe Oberflächenenergie kann beispielsweise bei hydrophilen Kieselsäure durch Hydrophobierung abgeschwächt werden, d.h., die hydrophilen Silanolgruppen auf der Oberfläche der Kieselsäure werden in hydrophobe organische Gruppen umgewandelt oder mit hydrophoben Polymeren etc. bedeckt. Die auf diese Weise hergestellten hydrophoben Kieselsäuren weisen eine wesentlich niedrigere Oberflächenenergie auf (ca. 30 mJ/m$^2$), was wesentlich schwächere Partikel-Partikel- sowie Partikel-Polymer-Wechselwirkungen zur Folge hat. Die Verwendung hydrophober Füllstoffe in Siliconzusammensetzungen ermöglicht es daher, die Aggregate gut zu dispergieren und den durch den Füllstoffgehalt bedingten Viskositätsanstieg zu beschränken.

Entscheidend für die Balance zwischen den Partikel-Partikel- und Partikel-Polymer-Wechselwirkungen sind dabei die Oberflächen- und Grenzflächenenergien der beteiligten Materialien. Thermodynamisch betrachtet versucht ein System bestehend aus zwei Materialien "1" und "2" deren Grenzflächenenergie $\gamma_{12}$ zu minimieren. Die Oberflächenenergie (auch als Oberflächenspannung bezeichnet) ist jene Energie, die notwendig ist, um die Oberfläche des Materials um eine Flächeneinheit im Vakuum zu vergrößern. Die Grenzflächenenergie (auch als Grenzflächenspannung bezeichnet) ist jene Energie, die notwendig ist, um die Grenzfläche zwischen zwei Materialien um eine Flächeneinheit zu vergrößern. Diese Grenzflächenenergie hängt mit den Oberflächenenergien der beiden Materialien, $\gamma_1$ und $\gamma_2$, wie folgt zusammen:

$$\gamma_{12} = \gamma_1 + \gamma_2 - W_{12}, \quad (\mathrm{IX})$$

wobei $W_{12}$ die freie Adhäsionsarbeit darstellt, die aufgewendet werden muss, um eine Kontaktfläche der beiden Materialien von der Größe einer Flächeneinheit vollständig im Vakuum zu separieren. Daraus folgt, erstens, dass intensivere Wechselwirkungen zwischen den Materialien 1 und 2 deren Grenzflächenenergie vermindern. Zweitens, der Kontakt von Materialien mit niedrigerer Oberflächenenergie führt ebenfalls zu einer niedrigeren Grenzflächenenergie.

Findet der Kontakt der beiden Materialien 1 und 2 nicht im Vakuum statt, sondern in einem Medium "3", so lässt sich zeigen, dass die zur Separation der beiden Materialien aufzubringende freie Adhäsionsarbeit, $W_{132}$, durch die folgende Gleichung gegeben ist (vgl. J. N. Israelachvili, Intermolecular and Surface Forces, 3th Edition, Academic Press, 2011):

$$W_{132} = \gamma_{13} + \gamma_{23} - \gamma_{12}. \quad (\mathrm{X})$$

Ist diese Adhäsionsarbeit hoch (positiv), wird ein Kontakt der beiden Materialien 1 und 2 im Medium 3 favorisiert, ist sie niedrig (negativ), strebt das System aus thermodynamischen Gründen eine Separation der Materialien 1 und 2 im Medium 3 an.

Identifiziert man die Materialien 1 und 2 mit zwei Füllstoffaggregaten und Material 3 mit der Siliconmatrix, ergibt sich aus Gleichung (X) eine deutlich positive Adhäsionsarbeit, welche die Ausbildung eines Füllstoffnetzwerks in der Siliconmatrix über physikalische Wechselwirkungen favorisiert, d.h., im Zuge der Einstellung des thermodynamischen Gleichgewichts wird ein Füllstoffnetzwerk in der Siliconmatrix aufgebaut. Dieses physikalische Füllstoffnetzwerk bewirkt eine Verringerung der Beweglichkeit der in diesem Netzwerk befindlichen Polymerketten, was mit einem erheblichen Viskositätsanstieg verbunden ist.

Da die zwischen den Kieselsäureaggregaten wirkenden schwachen physikalischen Wechselwirkungen durch Scherkräfte überwunden werden können, bricht das Füllstoffnetzwerk bei intensiver Scherung zusammen, wodurch die Beweglichkeit der Polymerketten schlagartig erhöht wird und die Viskosität entsprechend stark abnimmt. Man spricht daher von einem scherverdünnenden oder strukturviskosen (auch thixotropen) Verhalten.

Wird die Scherung einer solchen Siliconzusammensetzung eingestellt, kehrt das System in den ursprünglichen Gleichgewichtszustand zurück (Relaxation), d.h., das Füllstoffnetzwerk wird wieder aufgebaut und die Viskosität nimmt stetig zu, bis ihr Ausganswert erreicht wird. Die Geschwindigkeit, mit welcher das Relaxieren in den Ausgangszustand erfolgt, kann durch die Relaxationszeit $\tau$ charakterisiert werden.

Je höher der Wert der Adhäsionsarbeit $W_{131}$ ist, umso stärker ist die thermodynamische Triebkraft zur Ausbildung des Füllstoffnetzwerks, was in der Regel damit einhergeht, dass das Füllstoffnetzwerk sehr schnell ausgebildet wird. Ist der Wert der Adhäsionsarbeit $W_{131}$ positiv, jedoch sehr klein, erfolgt der Aufbau des Füllstoffnetzwerks bei der Gleichgewichtseinstellung sehr langsam und kann beispielsweise Monate bis Jahre in Anspruch nehmen.

Das rheologische Additiv (E) ist in der Lage, die Oberflächenenergie des dispergierten Füllstoffs anzuheben. Beispielsweise besitzt 3-Glycidoxypropyltrimethoxysilan eine Oberflächenenergie von 38,5 mJ/m$^2$ und ist damit höher als jene der oben genannten hydrophoben Kieselsäureoberfläche.

Die als Additivklassen (E1), (E2) und (E3) aufgeführten Verbindungen adsorbieren an der Füllstoffoberfläche, wo sie deren Oberflächenenergie erhöhen und auf diese Weise die thermodynamische Triebkraft zur Ausbildung eines physikalischen Füllstoffnetzwerks erhöhen und damit ein scherverdünnendes Verhalten verursachen.

Mit der ausgeprägt hydrophoben Siliconmatrix sind diese Verbindungen nur teilverträglich. Die Polarität bzw. Oberflächenenergie der Verbindungen (E) darf nicht zu hoch sein, da dies zu einer unerwünschten Phasenseparation (Entmischung) zwischen Silicon und Additiv führen könnte.

Falls die durch das Rheologieadditiv (E) herbeigeführte Erhöhung der Oberflächenenergie der Füllstoffaggregate zu niedrig ist, resultiert eine zu langsame Rückkehr in die Ausgangsviskosität (zu lange Relaxationszeit) und die deponierten Tropfen der Siliconzusammensetzung zerfließen übermäßig. Dies hat eine unzureichende Detailgetreue des Druckbildes zur Folge. Beispielsweise können keine scharfen Kanten des Formkörpers erzeugt werden.

Ist hingegen die durch das Rheologieadditiv (E) verursachte Erhöhung der Oberflächenenergie zu groß, können zu kurze Relaxationszeiten für die höherviskosen Siliconzusammensetzungen resultieren, d.h., die deponierten Tropfen fließen vor der Vernetzung nur unzureichend ineinander, was die mechanische Festigkeit des gedruckten Formteils vermindert (schlechte Lagenhaftung) und/oder in einer rauen Oberfläche resultiert (dies ist in der Regel unerwünscht, kann aber ggf. genutzt werden, um beispielsweise matte Oberflächen zu erzeugen).

Die durch das Additiv (E) erzielte Erhöhung der Oberflächenenergie des Bestandteils (D) hängt vor allem von zwei Faktoren ab, der Oberflächenenergie des Additivs (E) und der Konzentration von (E) in der Siliconzusammensetzung. In gewissen Grenzen können daher niedrige Konzentrationen an höherenergetischen Additiven (E) den gleichen Effekt bewirken wie höhere Konzentrationen an niedrigerenergetischen Additiven.

Allerdings weist die Füllstoffoberfläche eine Sättigungsgrenze für die Adsorption des Additivs (E) auf, so dass eine übermäßige Erhöhung der Konzentration an (E) nicht sinnvoll ist. Diese Sättigungsgrenze kann wiederum von der Art des Additivs (Molekulargewicht, Anzahl polarer Gruppen im Molekül etc.) abhängig sein.

Selbstverständlich hängt auch die durch die Zugabe von (E) verursache Viskositätserhöhung der (E)-freien Siliconzusammensetzung von der Oberflächenenergie und der Konzentration des Additivs (E) ab, darüber hinaus aber auch von der Ausgangsviskosität der (E)-freien Masse, die im Wesentlichen durch Gehalt und Hydrophobizität des Füllstoffs sowie durch die Polymerkettenlänge der Siliconbestandteile bestimmt wird.

Erweist sich die Ruheviskosität der (E)-freien Siliconzusammensetzung als zu hoch, d.h. über 300.000 mPas, kann dem durch (i) Erniedrigung der Füllstoffkonzentration, (ii) Erhöhung der Hydrophobizität des Füllstoffs, und/oder (iii) Erniedrigung der Polymerkettenlänge der Siliconbestanteile entgegengewirkt werden. Die exakte Einstellung der Ruheviskosität $\eta_{MP1}$ lässt sich somit durch einfache Routineexperimente erreichen.

Wie bereits erwähnt, sinkt die Viskosität der erfindungsgemäßen scherverdünnenden Siliconmassen durch intensive Scherung (z.B. beim Passieren der Jetting-Düse) auf sehr niedrige Werte. Bei vergleichbarem scherverdünnendem Verhalten sind jene Siliconkautschukmassen, die eine höhere Ruheviskosität aufweisen, auch nach intensiver Scherung in der Regel höherviskos als jene Siliconmassen, die eine niedrige Ruhescherviskosität aufweisen. Daher können die höherviskosen Siliconzusammensetzungen mit Relaxationszeiten am oberen Ende des beanspruchten Bereiches (also mit relativ langer Relaxationszeit) noch brauchbare Druckbilder ergeben, während Siliconzusammensetzungen mit relativ niedriger Ruheviskosität eher kurze Relaxationszeiten erfordern, um gute Ergebnisse zu erzielen. Diese Zusammenhänge sind verständlich, wenn man bedenkt, dass die Restrukturierung des Füllstoffnetzwerks in der Siliconmatrix nach Scherbeanspruchung ein dynamischer Vorgang ist, der durch die Geschwindigkeit von Fließvorgängen bestimmt wird.

Erweist sich die Restrukturierung des Füllstoffnetzwerks als zu langsam für den DOD-3D-Druck, kann dem (i) durch Erhöhung der Oberflächenenergie (beispielsweise durch einen geringeren Hydrophobierungsgrad) und/oder (ii) durch Erhöhung der Konzentration des Additivs (E) entgegen gewirkt werden. Die exakte Einstellung der Relaxationszeit $\tau$ lässt sich somit durch einfache Routineexperimente erreichen.

Bestandteil (E1) kann eine beliebige organische oder siliciumorganische Verbindung mit mindestens einer Epoxy-Gruppe sein und wird bevorzugt eingesetzt. Insbesondere bevorzugt sind epoxyfunktionelle organische Verbindungen (E1). Beispiele für organische epoxy-funktionelle Verbindungen (E1) sind 1,2-Epoxypropanol, Vinylcyclohexenmonoxid, Dodecanolglycidylether, Butylglycidylether, p-tert.-Butylphenylglycidylether, 2-Ethylhexylglycidylether, Glycidylmethacrylat, Dicyclopentadiendioxid, Vinylcyclohexendioxid, Butandioldiglycidylether, Neopentylglykoldiglycidylether, 1,6-Hexandioldiglycidylether, Polypropylenglykoldiglycidylether, Trimethylolpropantriglycidylether, 3,4-Epoxycyclohexylmethyl-3',4'-epoxycyclohexancarboxylat. Bestandteil (E1) kann ein epoxidiertes oder Epoxy-Gruppen enthaltendes Pflanzenöl sein, wie epoxidiertes Raps-, Sonnenblumen-, Lein-, Sojabohnen-, Palm-, Krambe-, Rizinus- und Vernoniaöl, oder eine epoxidierte Fettsäure, wie epoxidierte Öl-, Petroselin-, Eruca-, Linol-, Linolen-, Ricinol-, Calendula-, Vernol- und Santalbinsäure.

Bevorzugte Bestandteile (E1) sind siliciumorganische epoxy-funktionelle Verbindungen, die aus Einheiten der Formel (IV)

$$R^2_e R^3_f SiO_{(4-e-f)/2},\qquad (IV)$$

zusammengesetzt sind,

wobei $R^2$ gleich oder verschieden sein kann und die voranstehende Bedeutung der Reste R und $R^1$ bedeutet, $R^3$ ein mindestens eine Epoxy-Gruppe $CH_2(-O-)CH-$ oder $-CH(-O-)CH-$ enthaltender, gegebenenfalls halogensubstituierter, gegebenenfalls O-, N-, S- oder P-Atome enthaltender monovalenter Kohlenwasserstoffrest mit 2 bis 20 C-Atomen ist, mit der Maßgabe, dass
e 0, 1, 2 oder 3,

f 0, 1, 2, 3 oder 4,
und (e+f)<5 ist.

Beispiele hierfür sind epoxyfunktionelle Silane wie 2-(3,4-Epoxycyclohexyl)ethyltriethoxysilan, 2-(3,4-Epoxycyclohexyl)ethyltrimethoxysilan, (3-Glycidoxypropyl)trimethoxysilan, (3-Glycidoxypropyl)triethoxysilan, 5,6-Epoxyhexyltriethoxysilan, (3-Glycidoxypropyl)methyldimethoxysilan, (3-Glycidoxypropyl)methyldiethoxysilan, (3-Glycidoxypropyl)dimethylethoxysilan und Tris(glycidoxypropyldimethylsiloxy)phenylsilan. Weitere Beispiele für siliciumorganische Verbindungen (E1) sind epoxyfunktionelle Siloxane wie Bis(2-(3,4-Epoxycyclohexyl)ethyl)tetramethyldisiloxan, 1,5-Bis(glycidoxypropyl)-3-phenyl-1,1,3,5,5-pentamethyltrisiloxan, (3-Glycidoxypropyl)bis(trimethylsiloxy)silan, (3-Glycidoxypropyl)pentamethyldisiloxan, 1,3-Bis(glycidoxypropyl)tetramethyldisiloxan, Glycidoxypropyltetramethylcyclotetrasiloxan, Glycidoxypropyltrimethoxysilylethyl-pentamethylcyclopentasiloxan, Glycidoxypropyl-terminierte Polydimethylsiloxane, Epoxycyclohexylethyl-terminierte Polydimethylsiloxane, copolymere Poly(epoxycylohexylethylmethyl-dimethyl)siloxane und copolymere Poly(epoxycyclohexylethylmethyl-dimethyl-polyalkylenoxypropylmethyl)siloxane.

Bestandteil (E2) ist eine (oder ein Gemisch mehrerer) Polyether-funktionelle organische oder siliciumorganische Verbindung. Bevorzugt sind Polyalkylenglycole der allgemeinen Formel (V)

$$R^4\text{-}(O\text{-}CH2\text{-}CHR^5)_n\text{-}OR^4, \qquad (V)$$

wobei die Reste

R$^4$ gleich oder verschieden sein können und einen gegebenenfalls halogensubstituierten, gegebenenfalls O-, S-, N- oder P-Atome enthaltenden monovalenten, gesättigten oder ungesättigten $C_1$-$C_{20}$-Kohlenwassertsoffrest, ein Wasserstoffatom oder einen monovalenten siliciumorganischen Rest, bestehend aus Einheiten der Formel (I), darstellen,
die Reste R$^5$ gleich oder verschieden sein können und ein Wasserstoffatom oder ein $C_1$-$C_4$-Kohlenwasserstoffrest sind, bevorzugt ein Wasserstoffatom oder ein Methylrest,
n eine ganze Zahl von 1 bis 1000, bevorzugt 1 bis 500 und besonders bevorzugt 5-100 ist.

Bevorzugt sind Polyalkylenglykole mit einem Schmelzpunkt kleiner 100°C, bevorzugt kleiner 50°C, besonders bevorzugt sind bei Raumtemperatur (23 °C) flüssige Polyalkylenglykole. Das zahlenmittlere Molekulargewicht bevorzugter Polyalkylenglykole liegt zwischen 200 und 10.000 g/mol.
Bevorzugt sind Polyethylenglykole mit einem zahlenmittleren Molekulargewicht von 200 g/mol (PEG 200), ca. 400 g/mol (PEG 400), ca. 600 g/mol (PEG 600), ca. 1000 g/mol (PEG 1000). Bevorzugt sind Polypropylenglykole mit einem zahlenmittleren Molekulargewicht von ca. 425 g/mol, ca. 725 g/mol, ca. 1000 g/mol, ca. 2000 g/mol, ca. 2700 g/mol und 3500 g/mol. Bevorzugt sind Blockcopolymere aus Polyethylenglycol (PEG) und Polypropylenglycol (PPG) vom Typ PEG-PPG und PEG-PPG-PEG, z.B. Poly(ethylenglycol)-block-poly(propylenglycol)-block-poly(ethylenglycol), bevorzugt mit einem PEG-Anteil von > 10 Gew.-%, besonders bevorzugt mit einem PEG-Anteil von > 30 Gew.- %.
Bevorzugt sind Polyalkylenglykol-funktionelle Silane und Siloxane. Beispiele für Silane sind Bis((3-Methyldimethoxysilyl)propyl)polypropylenoxid, 1,3-(Bis(3-Triethoxysilylpropyl)polyethylenoxy)-2-methylenpropan, Bis(3-Triethoxysilylpropyl)polyethylenoxid mit 25-30 EO-Einheiten, 2-(Methoxy(polyethylenoxy)6-9propyl)dimethylmethoxysilane, 2-(Methoxy(polyethylenoxy) 6-9propyl)trimethoxysilan, Methoxytriethylenoxyundecyltrimethoxysilan und Bis(3-(triethoxysilylpropyl)-2-hydroxypropoxy)polyethylenoxid. Beispiele für Polyalkylenglycol-funktionelle Siloxane sind Block- und Pfropf-Copolymere bestehend aus Dimethylsiloxan- und Ethylenglykol-Einheiten.

Bestandteil (E3) ist eine (oder ein Gemisch jeweils mehrerer) Polyester-funktionelle oder eine (oder ein Gemisch jeweils mehrerer) Kohlensäureester-funktionelle Verbindung, die flüssig, amorph oder kristallin sein kann. Die Verbindungen können linear oder verzweigt sein.
Bevorzugt sind Polyester-funktionelle oder Kohlensäureester-funktionelle Verbindungen mit einem Schmelzpunkt kleiner 100°C, bevorzugt kleiner 50°C, besonders bevorzugt sind bei Raumtemperatur (23°C) flüssige Polyester-funktionelle oder Kohlensäureester-funktionelle Verbindungen.
Das zahlenmittlere Molekulargewicht bevorzugter Polyesterfunktioneller oder Kohlensäureester-funktioneller Verbindungen liegt zwischen 200 und 2500 g/mol.
Flüssige Verbindungen sind bevorzugt. Auch Gemische mehrerer Verbindungen aus beiden Verbindungsklassen sind möglich. Geeignete Polyester-funktionelle Verbindungen sind z.B. Polyester-Polyole, die beispielsweise aus Dicarbonsäuren mit 2 bis 12 Kohlenstoffatomen, vorzugsweise 4 bis 6 Kohlenstoffatomen, und mehrwertigen Alkoholen hergestellt werden können. Dem Fachmann sind OH-funktionelle Polyester allgemein bekannt und sie sind kommerziell erhältlich. Insbesondere geeignet sind zwei oder drei endständige OH-Gruppen enthaltene Polyesterpolyole.
Des Weiteren können auch Kondensationsprodukte von ω-Hydroxycarbonsäuren wie zum Beispiel ω-Hydroxycapronsäure und bevorzugt Polymerisationsprodukte von Lactonen, beispielsweise gegebenenfalls substituierten ω-Caprolactonen eingesetzt werden.

Geeignete Kohlensäureester-funktionelle Verbindungen sind zum Beispiel Polycarbonat-Polyole und Polycarbonat-Polyester-Polyole.

Es können auch Block-Copolymere aus den genannten Verbindungsklassen und Gemische aus den oben genannten Verbindungen eingesetzt werden.

### Beispiele für Mehrwertige Alkohole

Beispiele für mehrwertige Alkohole sind Glykole mit 2 bis 10, vorzugsweise 2 bis 6 Kohlenstoffatomen, wie z.B. Ethylenglykol, Diethylenglykol, Polyethylenglykol, Dipropylenglykol, Polypropylenglykol, Dibutylenglykol und Polybutylenglykol, Butandiol-1,4, Pentandiol-1,5, Hexandiol-1,6, Decandiol-1,10, 2,2-Dimethylpropandiol-1,3, 2-Methyl-1,3-propandiol, Propandiol-1,3 und Dipropylenglykol, 1,4-Hydroxymethylcyclohexan, Butantriol-1,2,4, Triethylenglykol, Tetraethylenglykol,.

Je nach den gewünschten Eigenschaften können die mehrwertigen Alkohole allein oder gegebenenfalls in Mischung untereinander verwendet werden.

### Beispiele für Dicarbonsäuren

Als Dicarbonsäuren kommen beispielsweise in Betracht: Aliphatische Dicarbonsäuren, wie Bernsteinsäure, Glutarsäure, Adipinsäure, Korksäure, Azelainsäure und Sebacinsäure und aromatische Dicarbonsäuren wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden.

### Beispiele für Kohlensäurederivate

Geeignet sind Ester der Kohlensäure mit den oben genannten mehrwertigen Alkoholen / Diolen, insbesondere solche mit 4 bis 6 Kohlenstoffatomen, wie Butandiol-1,4 und/oder Hexandiol-1,6.

### Beispiele für Polyester-Diole

Als Polyester-Diole vorzugsweise verwendet werden Ethandiolpolyadipate, 1,4-Butandiol-polyadipate, Ethandiol-1,4-butandiol-polyadipate, 1,6-Hexandiol-neopentylglykolpolyadipate, 1,6-Hexandiol-1,4-butandiol-polyadipate und Polycaprolactone.

Der Gehalt an (E) in der erfindungsgemäßen Siliconkautschukzusammensetzung beträgt 0,01-2 Gew.-%, vorzugsweise 0,05-1 Gew.-%, besonders bevorzugt 0,1-0,5 Gew.-%.

Um eine ausreichende scherverdünnende und thixotropierende Wirkung zu entfalten, müssen die im Bestandteil (E) befindlichen polaren Gruppen (Epoxy- und Ether- und Ester-Gruppen) in einem bestimmten Verhältnis zum Gehalt der erfindungsgemäßen Siliconkautschukzusammensetzung an Bestandteil (D) stehen. Erfindungsgemäß ist der Gehalt an (E) in Relation zu (D) so bemessen, dass auf ein Gramm Bestandteil (D) mindestens 0,1 $\mu$mol und höchstens 100 mmol polare Gruppen des Bestandteils (E) entfallen, bevorzugt zwischen 1 $\mu$mol bis 10 mmol und besonders bevorzugt 0,01 mmol bis 1 mmol.

Bevorzugt wird (D1) in Kombination mit (E1) eingesetzt. Besonders bevorzugt ist die Kombination von hydrophober pyrogener Kieselsäure als (D1) mit epoxyfunktionellen organischen Verbindungen (E1).

**Bestandteil (F)** ist dem Fachmann bekannt und umfasst sämtliche optionale Zusätze, die in der erfindungsgemäßen Siliconkautschukzusammensetzung enthalten sein können, um spezielle Eigenschaftsprofile zu erzielen. Hierzu gehören Inhibitoren, Hitzestabilisatoren, Lösungsmittel, Weichmacher, Farbpigmente, Sensibilisatoren, Photoinitiatoren, Haftvermittler, inaktive Füllstoffe, Leitfähigkeitsadditive, Siliconharze, etc. die sich von den Bestandteilen (A) bis (E) unterscheiden.

### Viskositätsbestimmung

Die Viskositäten werden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient (Scherrate) wurde in Abhängigkeit von der Viskosität gewählt und wird für jede Viskositätsangabe separat ausgewiesen.

Rheologische Messmethode zur Bestimmung der Viskosität $\eta_{MP1}$ und der Relaxationszeit $\tau$ der Siliconkautschukzusammensetzungen

Alle Messungen wurden auf einem Rheometer MCR 302 mit Luftlagerung der Firma Anton Paar bei 25°C, sofern nicht anders genannt, gemäß DIN EN ISO 3219 durchgeführt. Es wurde mit Platte-Platte-Geometrie (Durchmesser 25 mm) bei einer Spaltweite von 300 $\mu$m gemessen. Überschüssiges Probenmaterial wurde nach Anfahren des Messspaltes mittels Holzspatel entfernt (s.g. trimmen).

Vor dem Start des eigentlichen Messprofils wurde die Probe einer definierten Vorscherung unterworfen, um die rheologische Historie aus Probenauftrag und Anfahren der Messposition zu beseitigen. Diese Vorscherung (Messphase 1) umfasst eine Scherphase von 60 s bei einer Scherrate von 0,5 s$^{-1}$, wobei sich sehr schnell ein konstant bleibender Viskositätswert $\eta_{MP1}$ einstellt. Unmittelbar anschließend erfolgt eine 60 s während starke Scherung bei einer Scherrate von 25 s$^{-1}$ (Messphase 2), wodurch die Viskosität infolge des scherverdünnenden Verhaltens schlagartig auf einen sehr niedrigen, konstant bleibenden Wert abfällt.

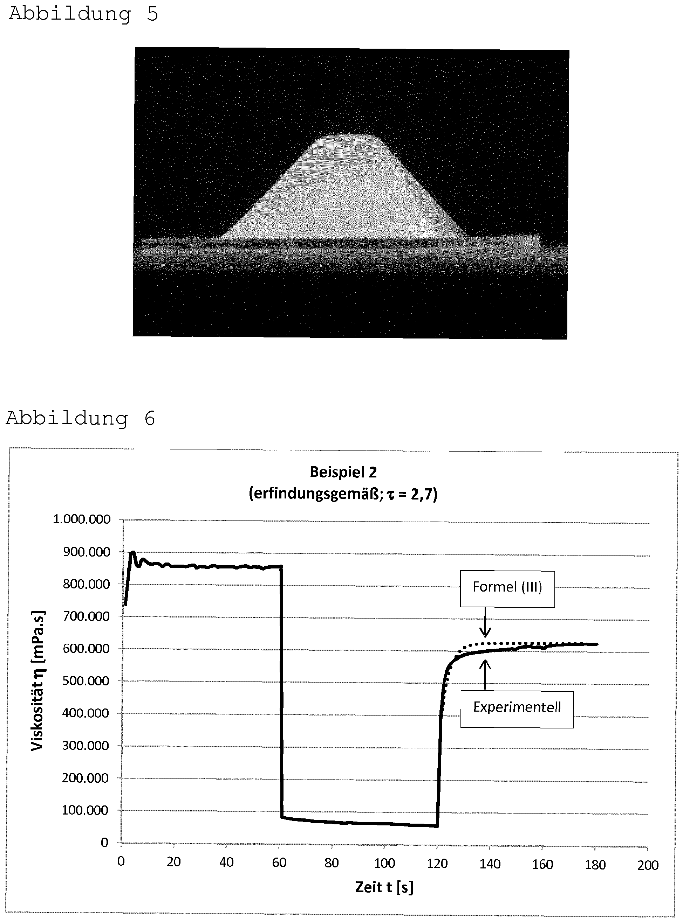

In der sich unmittelbar anschließenden Messphase 3, die 60 s andauert, erfolgt eine schwache Scherung bei 0,5 s$^{-1}$, wobei sich, je nach Relaxationsgeschwindigkeit, anfänglich eine rasche Zunahme der Viskosität zeigt, die sich im späteren Verlauf verlangsamt, so dass sich schließlich ein konstanter Wert $\eta_{max}$ einstellt (vgl. Abbildung 6). Der zeitliche Verlauf der Viskosität $\eta(t)$ während der Messphase 3 wurde mittels der Funktion entsprechend Formel (III)

$$\eta(t) = \eta_{max} + (\eta_0 - \eta_{max}) * EXP(-t/\tau), \qquad (III)$$

approximiert, wobei $\eta(t)$ die Viskosität zum Zeitpunkt t ist, beginnend mit t=0 unmittelbar am Ende von Messphase 2, $\eta_{max}$ die in der Messphase 3 erreichte maximale Viskosität bezeichnet, $\eta_0$ die unmittelbar am Ende der Messphase 2 (also zum Zeitpunkt t=0) gemessene Viskosität ist und EXP die e-Funktion bedeutet. Die so definierte Relaxationszeit $\tau$ beschreibt, wie schnell sich die Viskosität einer stark gescherten Masse erholt, wenn die Scherung (nahezu) abgestellt wird. In der Messphase 3 wurden 60 Messpunkte $(\eta,t)$ aufgezeichnet $(\eta_1, 1)$, $(\eta_2, 2)$, ..., $(\eta_{60}, 60)$ und in ein EXCEL® -Format übertragen. Die Bestimmung des in Formel (III) frei wählbaren Parameters $\tau$ erfolgte, indem die Summe der Fehlerquadrate zwischen den experimentell bestimmten Viskositätswerten und den nach Formel (III) berechneten Viskositätswerten durch Variation des Parameters $\tau$ minimiert wurde, d.h., $\tau$ wurde so berechnet, dass die experimentell bestimmten $(\eta,t)$-Werte bestmöglich (im Sinne der kleinsten Summe der Fehlerquadrate) durch die Funktion (III) beschrieben werden. Die Approximation wurde mit Hilfe des in EXCEL® verfügbaren Programms "Solver" mit der Lösungsmethode (Solving method) "GRG Nonlinear" durchgeführt. Es zeigte sich, dass das Viskositäts-Relaxationsverhalten der Siliconkautschukzusammensetzungen mittels der Formel (III), insbesondere anhand des Parameters $\tau$ (Relaxationszeit), ausgezeichnet beschrieben werden kann.

Erfindungsgemäße Siliconkautschukzusammensetzungen können ein-, zwei- oder mehr-komponentig hergestellt werden. Im einfachsten Fall erfolgt die Herstellung als einkomponentige erfindungsgemäße Siliconkautschukzusammensetzung durch gleichmäßiges Vermischen aller Komponenten.

Die erfindungsgemäßen Siliconkautschukzusammensetzungen werden zur Herstellung elastomerer Formkörper mittels ballistischer generativer 3D-Druck Verfahren verwendet.

Ein weiterer Gegenstand der vorliegenden Erfindung ist daher ein Verfahren zur Herstellung von elastomeren Formkörpern, dadurch gekennzeichnet, dass die Formkörper aus den erfindungsgemäßen Siliconkautschukzusammensetzungen mittels ballistischen generativen DOD-Verfahren (3D-Druck) aufgebaut werden.

**Beispiele**

Die folgenden Beispiele dienen der Erläuterung der Erfindung ohne diese zu beschränken.

Rheologische Messmethode

Sie erfolgte in den Beispielen analog wie oben beschrieben.

Konditionierung der Siliconkautschukzusammensetzungen

Die für den DOD-3D-Druck verwendeten Siliconkautschukzusammensetzungen wurden sämtlich vor der Verarbeitung entflüchtigt, indem 100 g der Masse in einer offenen PE-Dose in einem Exsikkator 3h bei einem Vakuum von 10 mbar und Raumtemperatur gelagert wurden. Anschließend wurde die Masse in eine 30ml-Kartusche mit Bajonettverschluss luftfrei abgefüllt und mit einem passenden Auspress-Stempel (Kunststoffkolben) verschlossen.

Die Luerlock Kartusche wurde dann in die vertikale Kartuschenhalterung des Vermes-Dosierventils flüssigkeitsdicht mit der Luerlock-Verschraubung nach unten eingeschraubt und der Druck-Stempel an der Kartuschenoberseite mit 3-8 bar Druckluft beaufschlagt; der in der Kartusche befindliche Auspress-Stempel verhindert, dass die Druckluft in die zuvor evakuierte Siliconkautschukzusammensetzung gelangen kann.

Alle UV-empfindlichen Silicon-Massen wurden unter Gelblicht (unter Ausschluss von Licht unterhalb 700 nm) hergestellt, analog entflüchtigt und in lichtundurchlässige 30 ml Kartuschen mit Luerlock-Bajonettverschluss abgefüllt.

Um zu verhindern, dass die Siliconmassen beim Lagern Luft aufnehmen, wurden die Kartuschengebinde mit Alu-kaschierten PE-Inlinern mit einem Vakuumschweissgerät der Fa. Landig + Lava GmbH & Co. KG, Valentinstraße 35 - 1,D-88348 Bad Saulgau, unter Vakuum verpackt.

Verwendete Rohstoffe und Siliconkautschukzusammensetzungen

Vinyl-funktionelle Polyorganosiloxane gemäß Bestandteil (A):

**R1**: Vinyldimethylsiloxy-endständiges Polydimethylsiloxan mit einer Viskosität von 200 cSt., erhältlich bei ABCR GmbH, Karlsruhe, Deutschland unter der Produktbezeichnung "Poly(dimethylsiloxane), vinyldimethylsiloxy terminated; viscosity 200 cSt.", Best.-Nr. AB109357, CAS-Nr. [68083-19-2].

**R2:** Vinyldimethylsiloxy-endständiges Polydimethylsiloxan mit einer Viskosität von 1.000 cSt., erhältlich bei ABCR GmbH, Karlsruhe, Deutschland unter der Produktbezeichnung "Poly(dimethylsiloxane), vinyldimethylsiloxy terminated; viscosity 1000 cSt.", Best.-Nr. AB109358, CAS-Nr. [68083-19-2].

**R3:** Vinyldimethylsiloxy-endständiges Polydimethylsiloxan mit einer Viskosität von 20.000 cSt., erhältlich bei ABCR GmbH, Karlsruhe, Deutschland unter der Produktbezeichnung "Poly(dimethylsiloxane), vinyldimethylsiloxy terminated; viscosity 20000 cSt.", Best.-Nr. AB128873, CAS [68083-19-2] (ABCR-Katalog).

SiH-funktionelle Vernetzer gemäß Bestandteil (B):

**R4a:** Methylhydrosiloxan-Dimethylsiloxan-Copolymer mit einem Molekulargewicht von Mn = 1.900-2.000 g/mol und einem Methylhydrogensiloxy-Gehalt von 25-30 Mol-%, erhältlich bei Gelest, Inc. (65933 Frankfurt am Main, Deutschland) unter der Produktbezeichnung HMS-301.

**R4b:** Methylhydrosiloxan-Dimethylsiloxan-Copolymer mit einem Molekulargewicht von Mn = 1.900-2.000 g/mol und einem Methylhydrogensiloxy-Gehalt von 15-18 Mol-%, erhältlich bei Gelest, Inc. (65933 Frankfurt am Main, Deutschland) unter der Produktbezeichnung HMS-151.

**R4c:** Methylhydrosiloxan-Dimethylsiloxan-Copolymer mit einem Molekulargewicht von Mn = 900-1.200 g/mol und einem Methylhydrogensiloxy-Gehalt von 50-55 Mol-%, erhältlich bei Gelest, Inc. (65933 Frankfurt am Main, Deutschland) unter der Produktbezeichnung HMS-501.

Hydrosilylierungskatalysator gemäß Bestandteil (C):

**R5:** UV-aktivierbarer Platinkatalysator: Trimethyl-(methylcyclopentadienyl)-platin(IV), erhältlich bei Sigma-Aldrich®, Taufkirchen, Deutschland.

Verstärkungsmittel gemäß Bestandteil (D):

**R6:** Eine hydrophobierte pyrogene Kieselsäure mit einer BET-Oberfläche von 300 $m^2$/g wurde hergestellt analog der Patentschrift DE 38 39 900 A1 durch Hydrophobierung aus einer hydrophilen pyrogenen Kieselsäure Wacker HDK® T-30 (erhältlich bei WACKER CHEMIE AG, München, Deutschland).

Rheologisches Agens gemäß Bestandteil (E):

**R7:** Genapol PF 20 ist ein EO-PO Blockpolymer mit 20 Gew.-% Ethylenoxid im Polymer, CAS-Nr. [9003-11-6], Fa. Clariant GmbH, D-65926 Frankfurt am Main, Deutschland

**R8:** Genapol PF 40 ist ein EO-PO Blockpolymer mit 40 Gew.-% Ethylenoxid im Polymer, CAS-Nr. [9003-11-6], Fa. Clariant GmbH, D-65926 Frankfurt am Main, Deutschland

**R9:** Epoxidiertes Leinöl, CAS-Nr. 67746-08-1, "Edenol® B 316 Spezial"; Fa. Emery Oleochemicals GmbH, Henkelstr. 67, 40589 Düsseldorf,

**R10:** Desmophen C 1200, ein linearer OH-endständiger Polycarbonat-Polyester der Fa. Bayer Materials Science **R11:** Sipell RE 63 F, ein epoxyfunktionelles Polysiloxan der Fa. Wacker Chemie AG, München

**R12:** (3-Glycidoxypropyl)trimethoxysilan, 98%, erhältlich bei ABCR GmbH, 76187 Karlsruhe, Deutschland, CAS-Nr. [2530-83-8], unter der Artikel-Nr./Produktbezeichnung AB111152

**R13:** (3-Glycidoxypropyl)methyldimethoxysilan, 97 %, CAS-Nr. [65799-47-5], erhältlich bei ABCR GmbH, 76187 Karlsruhe, Deutschland, unter der Produktbezeichnung AB111150

**R14:** (3-Glycidoxypropyl)methyldiethoxysilan, CAS-Nr. [2897-60-1], erhältlich bei ABCR GmbH, 76187 Karlsruhe, Deutschland, unter der Produktbezeichnung AB111149

**R15:** DRAPEX 39, ein epoxidiertes Sojabohnenöl der Firma Galata Chemicals GmbH, Chemiestraße 22, 68623 Lampertheim, CAS-Nr. [801307-8]

**R16:** Triethylcitrat, CAS-Nr. [77-93-0], erhältlich bei Sigma-Aldrich

**R17:** TWEEN™ 20, ethoxylierter Sorbitanester, erhältlich bei der Firma Croda GmbH

**R18:** TWEEN™ 28, ethoxylierter Sorbitanester, erhältlich bei der Firma Croda GmbH

**R19:** TWEEN™ 60, ethoxylierter Sorbitanester, erhältlich bei der Firma Croda GmbH

**R20:** TWEEN™ 80, ethoxylierter Sorbitanester, erhältlich bei der Firma Croda GmbH

**R21:** TWEEN™ 85, ethoxylierter Sorbitanester, erhältlich bei der Firma Croda GmbH

**R22:** Wacker® IM 22, glykol-funktionelles Siliconöl, erhältlich bei Wacker Chemie AG

**R23:** Pulpsil® 955 S, polyether-modifiziertes Siliconöl, erhältlich bei Wacker Chemie AG

**R24:** Pulpsil® 960 S, polyether-modifiziertes Siliconöl, erhältlich bei Wacker Chemie AG

Optionaler Bestandteil (F)

**R26:** Stabilisator (Inhibitor) 1-Ethinylcyclohexanol; 99%, CAS-Nr. 78-27-3, ≥99%, erhältlich bei ABCR GmbH, 76187 Karlsruhe, Deutschland

Erfindungsgemäße sowie nicht erfindungsgemäße Beispiele 1-30:

Die Herstellung der Siliconkautschukzusammensetzungen erfolgte, indem in einem ersten Schritt Bestandteil (A) und Bestandteil (D) wie nachfolgend beschrieben in den in Tabelle 1-4 angegebenen Gewichtsverhältnissen innig vermischt wurden.

Hierzu wurden 60 Gew.-% der Gesamtmasse des Bestandteils (A) in Form von 255 g in einem Doppel-Z-Kneter bei einer Temperatur von 25°C vorgelegt und der Kneter auf 70°C temperiert. Nach Erreichen der 70°C wurde die sich aus den in Tab. 1-4 angegebenen Gewichtsverhältnissen entsprechende Gesamtmenge an Bestandteil (D), also die als Edukt R6 beschriebene hydrophobe pyrogene Kieselsäure, portionsweise unter fortwährendem Kneten während 1 Stunde zudosiert, eingeknetet und die Masse homogenisiert. Anschließend wurde die entstandene relativ hochviskose Masse während 1 Stunde bei 150°C unter Ölpumpenvakuum (<100hPa) geknetet und entflüchtigt. Nach dieser Ausheizphase wird das Vakuum gebrochen und die Temperierung auf Raumtemperatur gestellt. Nun werden die restlichen 40 Gew.-% der Gesamtmasse des Bestandteils (A), also 170 g, eingemischt und die Masse während einer Stunde bei Raumtemperatur homogenisiert.

Die weitere Herstellung der Siliconkautschukzusammensetzungen erfolgte (unter Gelblicht bzw. Lichtausschluss) durch inniges Vermischen der nach voranstehend beschriebenem Verfahren hergestellten Mischung aus (A) und (D) mit den übrigen Bestandteilen (B), (E) (F) und (C) in Speedmixer®-Mischbechern mit Schraubverschluss der Fa. Hauschild & Co. KG, Waterkamp 1, 59075 Hamm. Dazu wurden die Komponenten nacheinander in den entsprechenden Mischbecher eingewogen und manuell gemischt. Anschließend wurde der mit einem passenden Schraubdeckel verschlossene Becher in einem Vakuum-Speedmixer® DAC 400.2 VAC-P der Fa. Hauschild & Co. KG, Waterkamp 1, 59075 Hamm mindestens 5 Minuten lang bei 1500 UMin[-1] unter einem Vakuum von 100 mbar gemischt und entgast. In den Schraubdeckel wurde vor dem Vakuum-Mischvorgang im Vakuum-Speedmixer® ein kleines Loch gebohrt, um die Luft aus dem Mischbecher entweichen zu lassen.

Anschließend wurde die Masse aus dem Mischbecher in eine lichtdichte 30 ml-Luerlock-Kartusche luftfrei abgefüllt (mit Hilfe eines Abfüllsystems der Fa. Hauschild, bestehend aus einer passenden Speed-Disc und einer Hebelpresse). Anschließend wurde die Kartusche mit einem passenden Auspress-Stempel (Kunststoffkolben) verschlossen.

Die Zusammensetzungen der erfindungsgemäßen und nicht erfindungsgemäßen Siliconkautschukzusammensetzungen sind in den Tabellen 1 bis 4 angegeben.

**Tabelle 1 (alle Angaben in Gew.-% außer R5 in Gew.-ppm bezogen auf Pt-Metall):**

| Bestand-teil | | Bsp.1 | Bsp.2 | Bsp.3 | Bsp.4 | Bsp.5 | Bsp.6 | Bsp.7 | Bsp.8 | Bs |
|---|---|---|---|---|---|---|---|---|---|---|
| (A) | R1 | 18 | 11 | 11 | 11 | 11 | 11 | 11 | 18 |  |
| | R2 | 5 | 8 | 8 | 8 | 8 | 8 | 8 | 5 |  |
| | R3 | 51 | 54 | 54 | 54 | 54 | 54 | 54 | 52 | 5 |
| (B) | R4a | 5,0 | 4,8 | 4,8 | 4,8 | 4,8 | 4,5 | 4,5 | 5,0 | 5 |
| (C) | R5 | 15 | 27 | 27 | 27 | 27 | 15 | 15 | 15 |  |
| (D) | R6 | 20 | 21 | 21 | 21 | 21 | 22 | 22 | 20 | 2 |
| (E) | | 1 R12 | 1 R13 | 1 R14 | 1 R11 | 1 R10 | 0,05 R8 | 0,1 R8 | 0,05 R7 | 0, |
| (F) | R26 | 0,0025 | | | | | | | | |
| Relaxationszeit $\tau$ | | | | | | | | | | |
| $\tau$ [sec] | | 3,4 | 2,7 | 4,2 | 1,0 | 1,2 | 3,5 | 0,05 | 5,3 | 6 |
| Viskosität $\eta_{MP1}$ der (E) haltigen Zusammensetzung | | | | | | | | | | |
| [Pa.s] | | 323 | 858 | 769 | 1320 | 1440 | 823 | 1530 | 269 | 2 |
| Viskosität $\eta_{MP1}$ der (E) freien Zusammensetzung | | | | | | | | | | |
| [Pa.s] | | 79 | 153 | 153 | 153 | 153 | 112 | 112 | 79 | 7 |

**Tabelle 2 (alle Angaben in Gew.-% außer R5 in Gew.-ppm bezogen auf Pt-Metall):**

| Bestandteil | | Bsp.10[*)] | Bsp.11[*)] | Bsp.12[*)] | Bsp.13[*)] | Bsp.14 | Bsp.15 | Bsp.16 |
|---|---|---|---|---|---|---|---|---|
| (A) | R1 | 5 | 8 | 9 | 8 | 18 | 18 | 18 |
| | R2 | 5 | 9 | 9 | 9 | 5 | 5 | 5 |
| | R3 | 60 | 55 | 57 | 57 | 52 | 52 | 52 |
| (B) | R4a | | - | 3,2 | 2,2 | 5,0 | 5,0 | 5,0 |
| | R4b | 4,0 | 6,8 | - | - | - | - | - |
| | R4c | - | - | - | 2,2 | - | - | - |
| (C) | R5 | 15 | 15 | 15 | 15 | 15 | 15 | 15 |
| (D) | R6 | 26 | 21 | 22 | 22 | 20 | 20 | 20 |
| (E) | R15 | - | - | - | - | 0,1 | 0,5 | 1,0 |
| (F) | R26 | 0,0025 | | | | | | |
| Relaxationszeit $\tau$ | | | | | | | | |
| $\tau$ [sec] | | 10,4 | 14,9 | 13,2 | 13,6 | 2,5 | 0,7 | 0,6 |
| Viskosität $\eta_{MP1}$ der (E) haltigen Zusammensetzung | | | | | | | | |

(fortgesetzt)

| Bestandteil | Bsp.10*) | Bsp.11*) | Bsp.12*) | Bsp.13*) | Bsp.14 | Bsp.15 | Bsp.16 |
|---|---|---|---|---|---|---|---|
| [Pa.s] | - | - | - | - | 389 | 992 | 1040 |
| Viskosität $\eta_{MP1}$ der (E) freien Zusammensetzung | | | | | | | |
| [Pa.s] | 293 | 97 | 126 | 122 | 79 | 79 | 79 |
| *) nicht erfindungsgemäß | | | | | | | |

**Tabelle 3 (alle Angaben in Gew.-% außer R5 in Gew.-ppm bezogen auf Pt-Metall):**

| Bestandteil | | Bsp.17*) | Bsp.18 | Bsp.19 | Bsp.20*) | Bsp.21 | Bsp.22 | Bsp.23 |
|---|---|---|---|---|---|---|---|---|
| (A) | R1 | 18 | 18 | 18 | 18 | 18 | 18 | 18 |
| | R2 | 5 | 5 | 5 | 5 | 5 | 5 | 5 |
| | R3 | 52 | 52 | 52 | 52 | 52 | 52 | 52 |
| (B) | R4a | 5,0 | 5,0 | 5,0 | 5,0 | 5,0 | 5,0 | 5,0 |
| (C) | R5 | 15 | 15 | 15 | 15 | 15 | 15 | 15 |
| (D) | R6 | 20 | 20 | 20 | 20 | 20 | 20 | 20 |
| (E) | | 0,1 R16 | 0,5 R16 | 0,1 R17 | 0,1 R18 | 0,5 R18 | 0,1 R19 | 0,1 R20 |
| (F) | R26 | 0,0025 | | | | | | |
| Relaxationszeit $\tau$ | | | | | | | | |
| $\tau$ [sec] | | 14,6 | 5,5 | 1, 6 | 15,6 | 5,8 | 1, 6 | 1,4 |
| Viskosität $\eta_{MP1}$ der (E) haltigen Zusammensetzung | | | | | | | | |
| [Pa.s] | | 101 | 230 | 468 | 93 | 162 | 499 | 571 |
| Viskosität $\eta_{MP1}$ der (E) freien Zusammensetzung | | | | | | | | |
| [Pa.s] | | 79 | 79 | 79 | 79 | 79 | 79 | 79 |
| *) nicht erfindungsgemäß; in den nicht erfindungsgemäßen Bsp. 17 und 20 ist die Erhöhung der Oberflächenenergie des Füllstoffs durch R16 bzw. R17 zu gering, so dass sich zu hohe Relaxationszeiten ergeben. Durch Erhöhung der Konzentration an (E) lässt sich dieses Problem beheben (vgl. erfindungsgemäße Bsp.18 und 21). | | | | | | | | |

**Tabelle 4 (alle Angaben in Gew.-% außer R5 in Gew.-ppm bezogen auf Pt-Metall):**

| Bestandteil | | Bsp.24 | Bsp.25 | Bsp.26 | Bsp.27 | Bsp.28*) | Bsp.29*) | Bsp.30*) |
|---|---|---|---|---|---|---|---|---|
| (A) | R1 | 18 | 18 | 18 | 18 | 18 | 14 | 12 |
| | R2 | 5 | 5 | 5 | 5 | 4 | 9 | 12 |
| | R3 | 52 | 52 | 52 | 52 | 57 | 56 | 55 |
| (B) | R4a | 5,0 | 5,0 | 5,0 | 5,0 | 5,0 | 5,0 | 5,0 |
| (C) | R5 | 15 | 15 | 15 | 15 | 15 | 15 | 15 |
| (D) | R6 | 20 | 20 | 20 | 20 | 16 | 16 | 16 |
| (E) | | 0,1 R21 | 0,1 R22 | 0,1 R23 | 0,1 R24 | - | - | - |
| (F) | R26 | 0,0025 | | | | | | |
| Relaxationszeit $\tau$ | | | | | | | | |

(fortgesetzt)

| Bestandteil | Bsp.24 | Bsp.25 | Bsp.26 | Bsp.27 | Bsp.28*) | Bsp.29*) | Bsp.30*) |
|---|---|---|---|---|---|---|---|
| $\tau$ [sec] | 3,2 | 4,9 | 1,8 | 3,0 | 17,7 | 17,6 | 17,5 |
| Viskosität $\eta_{MP1}$ der (E) haltigen Zusammensetzung | | | | | | | |
| [Pa.s] | 343 | 263 | 473 | 389 | - | - | - |
| Viskosität $\eta_{MP1}$ der (E) freien Zusammensetzung | | | | | | | |
| [Pa.s] | 79 | 79 | 79 | 79 | 30 | 31 | 32 |
| *) nicht erfindungsgemäß | | | | | | | |

DOD-3D-Drucker:

Die herstellten Siliconkautschukzusammensetzungen wurden im DOD-Verfahren in einer Fertigungsanlage "NEO-3D-Drucker" der Firma "German RepRap GmbH" zu Siliconelastomerteilen verarbeitet. Hierfür wurde der o.g. 3D-Drucker umgebaut und angepasst. Die ursprünglich im "NEO-3D-Drucker" montierte Thermoplast-Filament-Dosiereinheit wurde durch eine Jetting-Düse der Firma "Vermes Microdispensing GmbH, Otterfing" ersetzt, um höherviskose bis standfest-pastöse Massen wie die erfindungsgemäßen Siliconkautschukzusammensetzungen im DOD-Verfahren abscheiden zu können.

Da der "NEO"-Drucker für die Installation von Jetting-Düsen nicht standardmäßig ausgerüstet war, wurde er modifiziert. Die Vermes-Jetting-Düse wurde so in die Drucker-Steuerung eingebunden, dass das Start-Stopp-Signal (Triggersignal) der Vermes-Jetting-Düse von der G-Code-Steuerung des Druckers betätigt wurde. Dazu wurde in der G-Code-Steuerung ein spezielles Signal hinterlegt. Die G-Code-Steuerung des Computers schaltete damit lediglich die Jetting-Düse ein und aus (Start und Stopp der Dosierung).

Für die Signalübertragung des Start-Stopp-Signals wurde das Heizkabel der ursprünglich installierten Filament-Heizdüse des "NEO"-Druckers getrennt und über ein Relais mit der Vermes-Düse verbunden.

Die übrigen Dosierparameter (Dosier-Frequenz, Rising, Falling usw.) der Vermes-Jetting-Düse wurden mittels der MDC 3200+ Microdispensing Control Unit eingestellt.

Die Steuerung des 3D-Druckers erfolgte mittels eines Computers. Die Software-Steuerung und Steuersignal-Anbindung des 3D-Druckers (Software: "Repetier-Host") wurde dahingehend modifiziert, dass damit sowohl die Bewegung der Dosierdüse in den drei Raumrichtungen gesteuert werden konnte als auch das Signal zur Tropfenabscheidung. Die maximale Verfahrgeschwindigkeit des "NEO"-3D-Druckers beträgt 0,3 m/s.

Dosiersystem:

Als Dosiersystem für die verwendeten Siliconkautschukzusammensetzungen diente das Microdispensing-Dosiersystem "MDV 3200A" der Firma "Vermes Microdispensing GmbH", bestehend aus einem Komplettsystem mit folgenden Komponenten: a) MDV 3200 A -- Düseneinheit mit einem Anschluss für Luerlock Kartuschen, welche an der Kartuschenoberseite mit 3-8 bar Druckluft (Schlauch mit Adapter) beaufschlagt wurden, b) Vermes Begleit-Düsenheizungs-System MDH-230tfl links, c) MDC 3200+ MicroDispensing Control Unit, die wiederum mit der PC-Steuerung verbunden war sowie über bewegliche Kabel mit der Düse, ermöglichte die Einstellung der Jetting Dosier-Parameter (Rising, Falling, Opentime, Needlelift, Delay, No Puls, Heater, Düse, Abstand, Voxeldurchmesser, Luft-Vordruck an der Kartusche). Es stehen Düsen mit Durchmessern von 50, 100, 150 und 200 $\mu$m zur Verfügung. Damit ließen sich feinste Tröpfchen der Siliconkautschukzusammensetzung im Nanoliter-Bereich auf jeder beliebigen xyz-Position der Arbeitsplatte bzw. der bereits vernetzten Siliconelastomerschicht punktgenau platzieren. Sofern nicht anders angegeben, wurde in dem Vermes-Ventil als Standard-Düseneinsatz eine 200 $\mu$m Düse eingebaut.

Als Vorratsbehälter für die Siliconkautschukzusammensetzung dienten senkrecht stehende 30 ml Luerlock Kartuschen, die flüssigkeitsdicht an die Dispensing-Düse aufgeschraubt und mit Druckluft beaufschlagt wurden.

Die Steuerung des modifizierten "NEO"-3D-Druckes und des "Vermes"-Dosiersystems erfolgte mit einem PC und einer Open-Source-Software "Simplify 3D".

Jetting:

Die Siliconkautschukzusammensetzungen wurden mit den nachfolgend angegebenen Jetting-Düsenparametern auf einem GlasObjektträger der Fläche 25 x 75 mm tröpfchenweise in Schichten der gewünschten Geometrie wiederholt abgeschieden, wobei die abgeschiedene Masse während des gesamten Druckvorgangs (ca. 50 sec) mit einem BLUEPOINT-Bestrahlungssystem mit einer Leistung von 13.200 mW/cm$^2$ kontinuierlich bestrahlt und dadurch vernetzt wurde.

Düsendurchmesser: 200 μm, Rising: 0,3 ms, Falling: 0,1 ms, Open Time: 15 ms, Needle Lift: 100%, Delay (Flächendruck): 25 ms, Delay (Einzelpunkte für Voxelgröße-Messung): 100 ms, Heizung: 45°C, Kartuschen-Vordruck: 3 bar.

Auf diese Weise wurden mit den erfindungsgemäßen Siliconkautschukzusammensetzungen transparente Siliconelastomerteile unterschiedlicher Geometrie erhalten.

Beispiel 1:

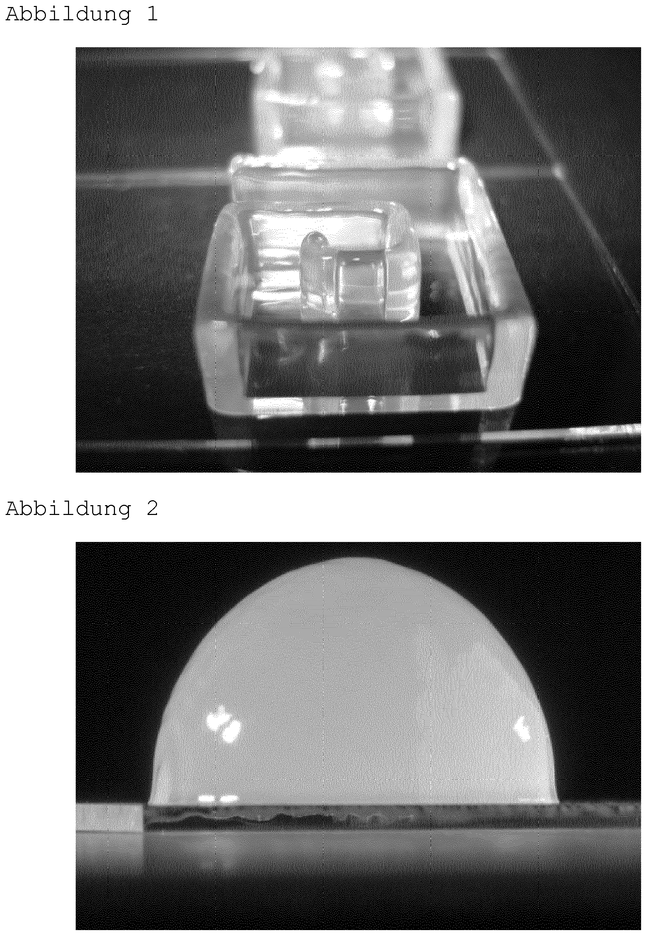

Die erfindungsgemäße Siliconkautschukzusammensetzung weist einen Relaxationsparameter von τ = 3,4 sec auf und ließ sich problemlos im DOD-Verfahren jetten (Voxeldurchmesser 0,6 mm) und schichtweise zu einer transparenten Rechteck-Spirale mit Außenumfang 20 x 20 mm und einer Höhe von 5 mm (vgl. Abbildung 1) aus Siliconelastomer aufbauen.

Beispiel 2:

Die erfindungsgemäße Siliconkautschukzusammensetzung weist einen Relaxationsparameter von τ = 2,7 sec auf und ließ sich problemlos im DOD-Verfahren jetten (Voxeldurchmesser 0,4 mm) und schichtweise zu einem quaderförmigen Siliconelastomerteil mit den Abmessungen 15 x 15 x 3 mm verarbeiten. Abbildung 6 zeigt die Messkurve von Beispiel 2 bestimmt mittels der rheologischen Messmethode (durchgezogene Linie) im Abgleich mit dem theoretischen Verlauf (gepunktete Linie) gemäß Formel (III) .

Beispiel 3:

Die erfindungsgemäße Siliconkautschukzusammensetzung weist einen Relaxationsparameter von τ = 4,2 sec auf und ließ sich problemlos im DOD-Verfahren jetten (Voxeldurchmesser 0,4 mm) und schichtweise zu einer Siliconelastomer-Halbkugel mit einem Durchmesser von 15 mm verarbeiten (vgl. Abbildung 2).

Beispiel 4:

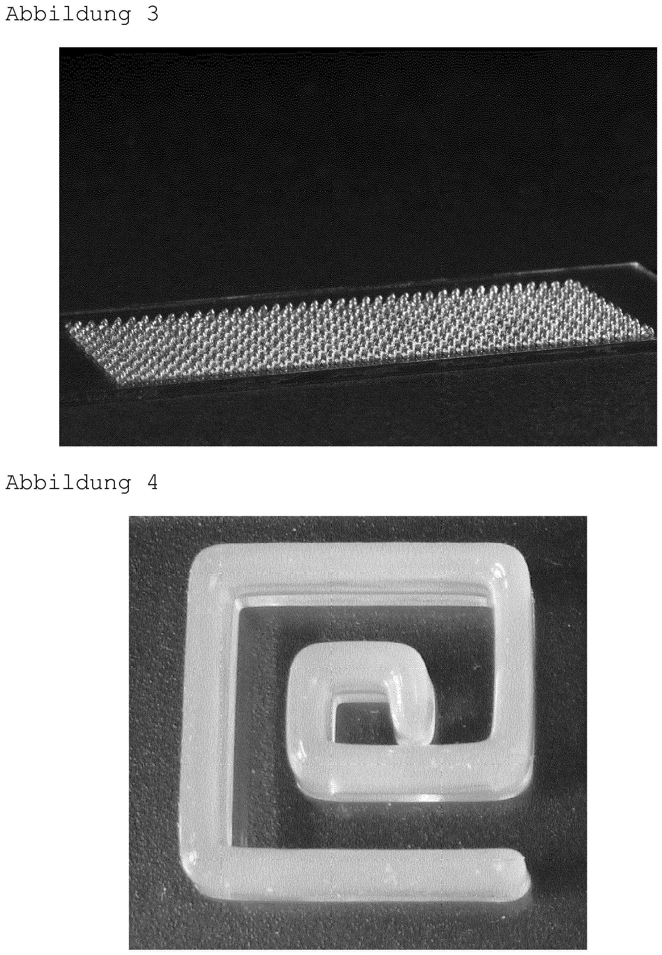

Die erfindungsgemäße Siliconkautschukzusammensetzung weist einen Relaxationsparameter von τ = 0,99 sec auf und ließ sich problemlos im DOD-Verfahren jetten (Voxeldurchmesser 0,4 mm) und schichtweise zu einem Siliconelastomerteil mit strukturierter Oberfläche (vgl. Abbildung 3) verarbeiten.

Beispiel 5:

Die erfindungsgemäße Siliconkautschukzusammensetzung weist einen Relaxationsparameter von τ = 1,21 sec auf und ließ sich problemlos im DOD-Verfahren jetten (Voxeldurchmesser 0,4 mm) und schichtweise zu einem quaderförmigen Siliconelastomerteil mit den Abmessungen 15 x 15 x 3 mm verarbeiten.

Beispiel 6:

Die erfindungsgemäße Siliconkautschukzusammensetzung weist einen Relaxationsparameter von τ = 3,54 sec auf und ließ sich problemlos im DOD-Verfahren jetten (Voxeldurchmesser 0,6 mm) und schichtweise zu einem spiralförmigen Siliconelastomerteil (vgl. Abbildung 4) verarbeiten.

Beispiel 7:

Die erfindungsgemäße Siliconkautschukzusammensetzung weist einen Relaxationsparameter von τ = 0,05 sec auf und ließ sich problemlos im DOD-Verfahren jetten (Voxeldurchmesser 0,6 mm). Durch schichtweisen Aufbau ohne UV-Bestrahlung wurde der Grünkörper einer Pyramide mit quadratischer Grundfläche mit den Abmessungen 20 x 20 x 10 mm hergestellt und erst anschließend vernetzt, indem der Grünkörper mit dem BLUEPOINT-Bestrahlungssystem mit einer Leistung von 13.200 mW/cm 10 Sekunden lang bestrahlt wurde. Es resultiert eine transparente Siliconelastomer-Pyramide (vgl. Abbildung 5).

Beispiel 8:

Die erfindungsgemäße Siliconkautschukzusammensetzung weist einen Relaxationsparameter von $\tau$ = 5,33 sec auf und ließ sich problemlos im DOD-Verfahren jetten (Voxeldurchmesser 0,6 mm) und schichtweise zu einem quaderförmigen Siliconelastomerteil mit den Abmessungen 15 x 15 x 3 mm verarbeiten.

Beispiel 9:

Die erfindungsgemäße Siliconkautschukzusammensetzung weist einen Relaxationsparameter von $\tau$ = 6,68 sec auf und ließ sich problemlos im DOD-Verfahren jetten (Voxeldurchmesser 0,6 mm) und schichtweise zu einem quaderförmigen Siliconelastomerteil mit den Abmessungen 15 x 15 x 3 mm verarbeiten.

Beispiel 10, 11, 12, 13 (nicht erfindungsgemäß):

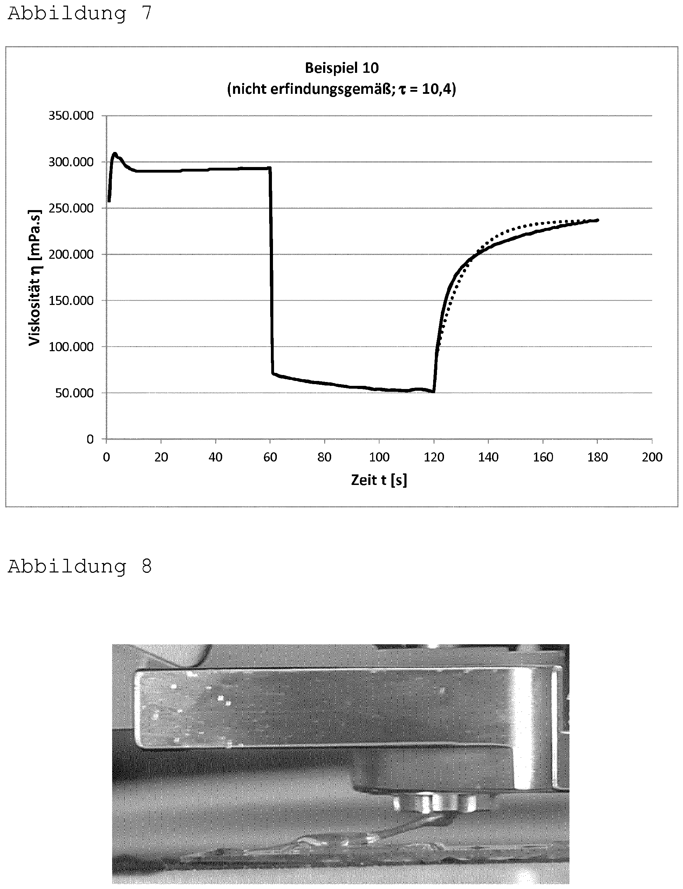

Das Jetting dieser Siliconkautschukzusammensetzungen lieferte ein unsauberes Druckbild, welches durch eine teilweise unvollständige Trennung der Einzeltropfen verursacht wurde (die Tropfen blieben über dünne Fäden miteinander verbunden, d.h., der Tropfenabriss war unvollständig). Zudem bildeten die auf der Arbeitsfläche auftreffenden Tropfen sehr breite flache Voxel aus, deren Durchmesser ca. 1500 $\mu$m betrugen. Infolge dieses Auseinanderfließens während des Drucks konnten feinere strukturelle Details nicht mehr abgebildet werden. Die nicht erfindungsgemäßen Siliconkautschukzusammensetzungen neigten zum Verkleben der Düse nach kurzer Zeit, da die Massen auch ohne Drucksignal allein durch den Vordruck in der Kartusche durch das Jetting-Ventil hindurch liefen. Es war kein dauerstabiler DOD-3D-Druck möglich. Abbildung 7 zeigt die Messkurve von Beispiel 10 bestimmt mittels der rheologischen Messmethode (durchgezogene Linie) im Abgleich mit dem theoretischen Verlauf (gepunktete Linie) gemäß Formel (III). Das Verkleben des Druckventils während des Druckvorgangs zeigt Abbildung 8.

Beispiel 10 (nicht erfindungsgemäß):

Mit der nicht erfindungsgemäßen SiliconkautschukZusammensetzung aus dem Beispiel 10 wurde versucht, durch schichtweisen Aufbau mit simultaner UV-Bestrahlung ein quaderförmiges Siliconelastomerteil mit den Abmessungen 15 x 15 x 3 mm herzustellen.

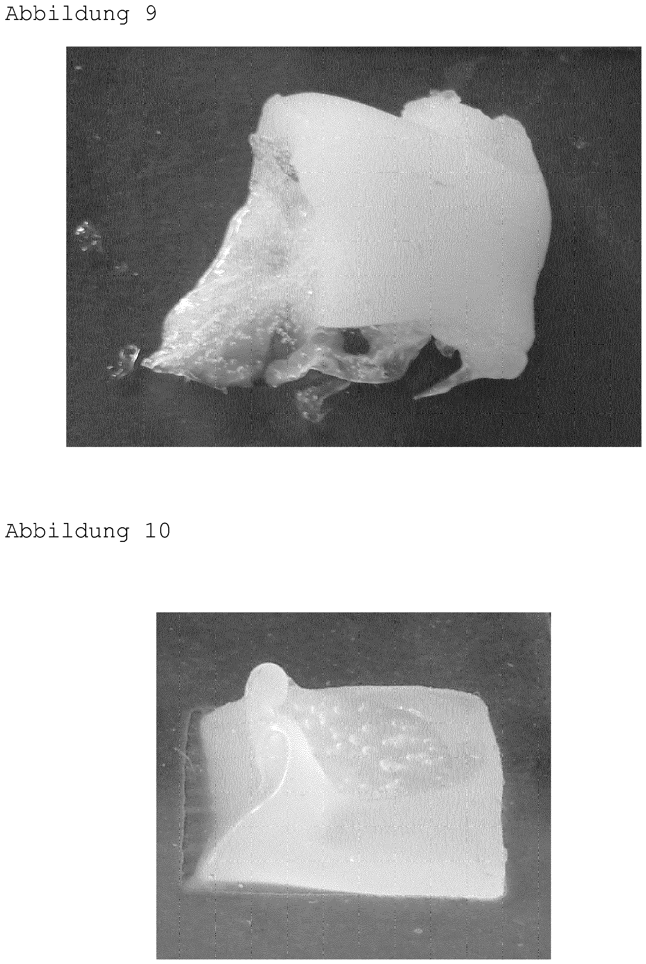

Bereits die erste Druckschicht zeigte ein unscharfes Druckbild. Während des weiteren Druckprozesses verklebte die Düse vollständig, so dass keine definierten Einzel-Tröpfchen mehr dosiert wurden, sondern die Masse aus der verklebten Jetting-Düse auf dem Bauteil unregelmäßig abgeschieden wurde und ein unförmiges Formteil resultierte. Das Formteil wies außerdem sichtbare Luftblasen auf (vgl. Abbildung 9).

Beispiel 11 (nicht erfindungsgemäß):

Mit der nicht erfindungsgemäßen Siliconkautschukzusammensetzung wurde versucht, durch schichtweisen Aufbau ohne UV-Bestrahlung des Grünkörpers ein quaderförmiges Siliconelastomerteil mit den Abmessungen 15 x 15 x 3 mm herzustellen. Hier verklebte die Düse des Jetting-Dosierventils sofort nach Beginn des Druckversuchs vollständig mit der abgeschiedenen Masse. Das weitere Durchfahren des Druckprogramms erzeugte ein unregelmäßiges, unförmiges vernetztes Formteil, welches sichtbare Luftblasen aufwies. Nach Beendigung des Druckprogramms wurde der Grünkörper vernetzt, indem er mit dem BLUEPOINT-Bestrahlungssystem mit einer Leistung von 13.200 mW/cm 10 Sekunden lang bestrahlt wurde (vgl. Abbildung 10).

Beispiel 28, 29, 30 (nicht erfindungsgemäß):

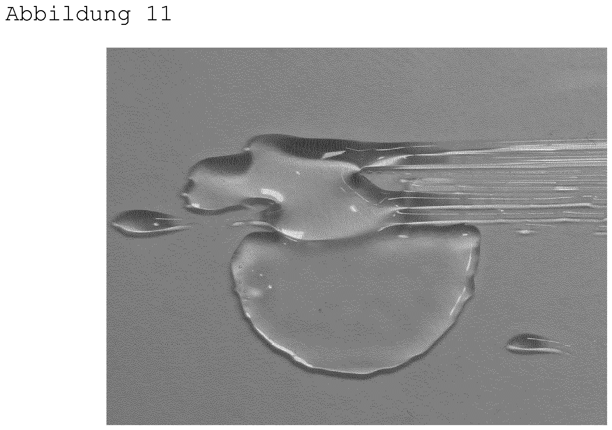

Mit der nicht erfindungsgemäßen Siliconkautschukzusammensetzung aus Beispiel 28 wurde versucht, durch schichtweisen Aufbau ohne UV-Bestrahlung des Grünkörpers ein halbkugelförmiges Bauteil mit Durchmesser 20 mm auf einem Glasobjektträger abzuscheiden. Die nicht erfindungsgemäßen Formulierungen führten zu noch schnellerem Austritt der Siliconmassen aus der Düsenöffnung der Jettingdüse. Bereits während der Abscheidung der ersten Schicht bildete sich an der Unterseite des Jetting-Ventils ein Tropfen, welcher sich infolge der aus der Düsenöffnung weiter austretenden Masse weiter vergrößerte. Der Tropfen verschmierte die bereits abgeschiedene Druckschicht. Daraufhin wurde der weitere Druckvorgang abgebrochen (vgl. Abbildung 11).

**Patentansprüche**

1. Siliconkautschukzusammensetzung für den 3D-Druck von Siliconformteilen im ballistischen generativen DOD-Verfahren enthaltend:

(A) 50 bis 95 Gew.-% mindestens einer linearen Organosiliciumverbindung mit mindestens zwei aliphatisch ungesättigten Gruppen pro Molekül,
(B) 1 bis 10 Gew.-% mindestens einer Organosiliciumverbindung mit mindestens zwei SiH-Gruppen pro Molekül, oder zusätzlich zu (A) und/oder (B) (G) 0-95 Gew.-% mindestens eine Organosiliciumverbindung mit mindestens zwei aliphatisch ungesättigten Gruppen und mindestens zwei SiH-Gruppen pro Molekül,
oder anstelle von (A)+(B)
(G) 50-95 Gew.-% mindestens eine Organosiliciumverbindung mit mindestens zwei aliphatisch ungesättigten Gruppen und mindestens zwei SiH-Gruppen pro Molekül,
(C) 0,1 bis 500 Gew.-ppm mindestens eines Hydrosilylierungskatalysators bezogen auf den Gehalt des Metalls zur gesamten Siliconkautschukzusammensetzung,
(F) 0 bis 30 Gew.-% Hilfsstoffe die sich von (D) und (E) unterscheiden,
sowie
(D) 1 bis 30 Gew.-% mindestens eines verstärkenden Materials, in Kombination mit

a) (E) 0,01 bis 1 Gew.-% eines rheologischen Agens, welches polare Gruppen enthält und ausgewählt wird aus (E1), (E2) und (E3) sowie deren Mischungen

(E1) Epoxygruppen-funktionellen Verbindungen,
(E2) (Poly)ethergruppen-funktionellen Verbindungen,
(E3) (Poly)estergruppen-funktionellen Verbindungen,
wobei die Epoxy- und Ether- und Ester-Gruppen auch in einem einzigen Molekül vorhanden sein können,

oder
b) (E) 0,01 bis 2 Gew.-% eines rheologischen Agens, welches polare Gruppen enthält und ausgewählt wird aus (E2) und (E3) sowie deren Mischungen

(E2) (Poly)ethergruppen-funktionellen Verbindungen,
(E3) (Poly)estergruppen-funktionellen Verbindungen,
wobei die Ether- und Ester-Gruppen auch in einem einzigen Molekül vorhanden sein können,

**dadurch gekennzeichnet, dass** die Relaxationszeit $\tau$ der Siliconkautschukzusammensetzung im folgenden Bereich liegt

$$0 \text{ Sekunden} < \tau \leq 10 \text{ Sekunden},$$

wobei sich $\tau$ aus Formel (III) ergibt:

$$\eta(t) = \eta_{max} + (\eta_0 - \eta_{max}) * EXP(-t/\tau), \qquad (III)$$

wobei

- $\eta(t)$ die Viskosität zum Zeitpunkt t ist,
- $\eta_{max}$ die nach Wegfall der Scherung innerhalb einer vorgegebenen Zeit erzielte maximale Viskosität bezeichnet,
- $\eta_0$ die unmittelbar nach starker Scherung (also zum Zeitpunkt t=0) gemessene Viskosität ist, und
- EXP die e-Funktion bedeutet,

mit der Maßgabe, dass die Viskosität $\eta_{MP1}$ der Siliconkautschukzusammensetzung enthaltend alle Bestandteile außer Bestandteil (E) höchstens 300.000 mPa.s beträgt,
wobei die Viskositätsmessung zur Bestimmung der Relaxationszeit $\tau$ sowie der Viskosität $\eta_{MP1}$ gemäß der in der Beschreibung offenbarten rheologischen Messmethode erfolgt.

**2.** Siliconkautschukzusammensetzung gemäß Anspruch 1, **dadurch gekennzeichnet, dass** die Relaxationszeit $\tau$ der Siliconkautschukzusammensetzung im folgenden Bereich liegt:

$$0 \text{ Sekunden} < \tau \leq 7 \text{ Sekunden}.$$

**3.** Siliconkautschukzusammensetzung gemäß Anspruch 1 oder 2, **dadurch gekennzeichnet, dass** die Relaxationszeit $\tau$ der Siliconkautschukzusammensetzung im folgenden Bereich liegt:

$$0 \text{ Sekunden} < \tau \leq 5 \text{ Sekunden}.$$

**4.** Siliconkautschukzusammensetzung gemäß einer der Ansprüche 1 bis 3 **dadurch gekennzeichnet, dass** (E) eine epoxyfunktionelle organische Verbindung (E1) ist.

**5.** Siliconkautschukzusammensetzung gemäß einer der Ansprüche 1 bis 4 **dadurch gekennzeichnet, dass** als (D) die Komponente (D1) verwendet wird, welche ausgewählt wird aus pyrogen hergestellten Kieselsäuren oder gefällten Kieselsäuren.

**6.** Siliconkautschukzusammensetzung gemäß einer der Ansprüche 1 bis 5 **dadurch gekennzeichnet, dass** durch UV- oder UV-VIS-Strahlung initiiert vernetzt wird.

**7.** Siliconkautschukzusammensetzung gemäß einer der Ansprüche 1 bis 6 **dadurch gekennzeichnet, dass** der Gehalt an (E) in Relation zu (D) so bemessen wird, dass auf ein Gramm Bestandteil (D) mindestens 0,1 $\mu$mol und höchstens 100 mmol polare Gruppen des Bestandteils (E) entfallen.

**8.** Verfahren zur Herstellung von elastomeren Formkörpern, **dadurch gekennzeichnet, dass** die Formkörper aus den erfindungsgemäßen Siliconkautschukzusammensetzungen gemäß den Ansprüchen 1 bis 7 mittels ballistischen generativen DOD-Verfahren (3D-Druck) aufgebaut werden.

**9.** Verwendung der Siliconkautschukzusammensetzung gemäß einer der Ansprüchen 1 bis 7 zur Herstellung von elastomeren Formkörpern mittels ballistischer generativer DOD-Verfahren (3D-Druck).

**Claims**

**1.** Silicone rubber composition for the 3D printing of silicone components in the ballistic additive DOD method, comprising:

(A) 50% to 95% by weight of at least one linear organosilicon compound having at least two aliphatically unsaturated groups per molecule,
(B) 1% to 10% by weight of at least one organosilicon compound having at least two SiH groups per molecule,
or, in addition to (A) and (B),
(G) 0%-95% by weight of at least one organosilicon compound having at least two aliphatically unsaturated groups and at least two SiH groups per molecule,
or, in place of (A)+(B),
(G) 50%-95% by weight of at least one organosilicon compound having at least two aliphatically unsaturated groups and at least two SiH groups per molecule,
(C) 0.1 to 500 ppm by weight of at least one hydrosilylation catalyst, based on the content of the metal relative to the overall silicone rubber composition,
(F) 0% to 30% by weight of auxiliaries other than (D) and (E),
and
(D) 1% to 30% by weight of at least one reinforcing material, in combination with

a) (E) 0.01% to 1% by weight of a rheological agent which contains polar groups and is selected from (E1), (E2) and (E3) and mixtures thereof

(E1) epoxy group-functional compounds,
(E2) (poly)ether group-functional compounds,
(E3) (poly)ester group-functional compounds,
where the epoxy and ether and ester groups may also be present in a single molecule,

or
b) (E) 0.01% to 2% by weight of a rheological agent which contains polar groups and is selected from (E2) and (E3) and mixtures thereof

(E2) (poly)ether group-functional compounds,
(E3) (poly)ester group-functional compounds,
where the ether and ester groups may also be present in a single molecule,

**characterized in that** the relaxation time $\tau$ of the silicone rubber composition is within the following range

$$0 \text{ seconds} < \tau \leq 10 \text{ seconds,}$$

where $\tau$ is calculated from formula (III):

$$\eta(t) = \eta_{max} + (\eta_0 - \eta_{max}) * EXP(-t/\tau), \qquad (III)$$

where

- $\eta(t)$ is the viscosity at time t,
- $\eta_{max}$ denotes the maximum viscosity attained within a given time after shearing has stopped,
- $\eta_0$ is the viscosity measured immediately after high shear (i.e. at time t = 0), and
- EXP means the e function,

with the proviso that the viscosity $\eta_{MP1}$ of the silicone rubber composition comprising all the constituents except for constituent (E) is not more than 300 000 mPa.s,
where the viscosity measurement for determination of the relaxation time $\tau$ and of the viscosity $\eta_{MP1}$ is effected by the rheological test method disclosed in the description.

2. Silicone rubber composition according to Claim 1, **characterized in that** the relaxation time $\tau$ of the silicone rubber composition is within the following range:

$$0 \text{ seconds} < \tau \leq 7 \text{ seconds.}$$

3. Silicone rubber composition according to Claim 1 or 2, **characterized in that** the relaxation time $\tau$ of the silicone rubber composition is within the following range:

$$0 \text{ seconds} < \tau \leq 5 \text{ seconds.}$$

4. Silicone rubber composition according to any of Claims 1 to 3, **characterized in that** (E) is an epoxyfunctional organic compound (E1).

5. Silicone rubber composition according to any of Claims 1 to 4, **characterized in that** the component used as (D) is component (D1) which is selected from fumed silicas and precipitated silicas.

6. Silicone rubber composition according to any of Claims 1 to 5, **characterized in that** crosslinking is effected with initiation by UV or UV-VIS radiation.

7. Silicone rubber composition according to any of Claims 1 to 6, **characterized in that** the content of (E) in relation to (D) is such that, for every one gram of constituent (D), there is at least 0.1 $\mu$mol and at most 100 mmol of polar groups of constituent (E).

8. Process for producing elastomeric shaped bodies, **characterized in that** the shaped bodies are formed from the inventive silicone rubber compositions according to Claims 1 to 7 by means of ballistic additive DOD methods (3D printing).

9. Use of the silicone rubber composition according to any of Claims 1 to 7 for production of elastomeric shaped bodies by means of ballistic additive DOD methods (3D printing).

**Revendications**

1. Composition de caoutchouc de silicone pour l'impression 3D de pièces moulées en silicone dans le procédé DOD additif balistique, contenant :

(A) 50 à 95 % en poids d'au moins un composé d'organosilicium linéaire contenant au moins deux groupes aliphatiquement insaturés par molécule,
(B) 1 à 10 % en poids d'au moins un composé d'organosilicium contenant au moins deux groupes SiH par molécule,
ou en plus de (A) et (B),
(G) 0 à 95 % en poids d'au moins un composé d'organosilicium contenant au moins deux groupes aliphatiquement insaturés et au moins deux groupes SiH par molécule,
ou à la place de (A)+(B),
(G) 50 à 95 % en poids d'au moins un composé d'organosilicium contenant au moins deux groupes aliphatiquement insaturés et au moins deux groupes SiH par molécule,
(C) 0,1 à 500 ppm en poids d'au moins un catalyseur d'hydrosilylation en termes de teneur du métal par rapport à la composition de silicone totale,
(F) 0 à 30 % en poids d'adjuvants qui diffèrent de (D) et (E),
ainsi que
(D) 1 à 30 % en poids d'au moins un matériau renforçant, en combinaison avec

a) (E) 0,01 à 1 % en poids d'un agent rhéologique, qui contient des groupes polaires et est choisi parmi (E1), (E2) et (E3), ainsi que leurs mélanges :

(E1) les composés à fonction groupes époxy,
(E2) les composés à fonction groupes (poly)éther,
(E3) les composés à fonction groupes (poly)ester,
les groupes époxy et éther et ester pouvant également être présents dans une molécule individuelle,

ou
b) (E) 0,01 à 2 % en poids d'un agent rhéologique, qui contient des groupes polaires et est choisi parmi (E2) et (E3), ainsi que leurs mélanges :

(E2) les composés à fonction groupes (poly)éther,
(E3) les composés à fonction groupes (poly)ester,
les groupes éther et ester pouvant également être présents dans une molécule individuelle,

**caractérisée en ce que** le temps de relaxation $\tau$ de la composition de caoutchouc de silicone se situe dans la plage suivante :

$$0 \text{ seconde} < \tau \leq 10 \text{ secondes}$$

$\tau$ étant donné par la formule (III) :

$$\eta(t) = \eta_{max} + (\eta_0 - \eta_{max}) * EXP(-t/\tau) \quad (III)$$

dans laquelle

- $\eta(t)$ est la viscosité au moment t,
- $\eta_{max}$ est la viscosité maximale obtenue après suppression du cisaillement pendant un temps prédéterminé,
- $\eta_0$ est la viscosité mesurée directement après un cisaillement important (c'est-à-dire au moment t = 0), et
- EXP signifie la fonction e,

à condition que la viscosité $\eta_{MP1}$ de la composition de caoutchouc de silicone contenant tous les constituants à l'exception du constituant (E) soit d'au plus 300 000 mPa·s,
la mesure de viscosité pour la détermination du temps de relaxation $\tau$ et de la viscosité $\eta_{MP1}$ ayant lieu selon la méthode de mesure rhéologique décrite dans la description.

2. Composition de caoutchouc de silicone selon la revendication 1, **caractérisée en ce que** le temps de relaxation $\tau$ de la composition de caoutchouc de silicone se situe dans la plage suivante :

$$0 \text{ seconde} < \tau \leq 7 \text{ secondes.}$$

3. Composition de caoutchouc de silicone selon la revendication 1 ou 2, **caractérisée en ce que** le temps de relaxation $\tau$ de la composition de caoutchouc de silicone se situe dans la plage suivante :

$$0 \text{ seconde} < \tau \leq 5 \text{ secondes.}$$

4. Composition de caoutchouc de silicone selon l'une quelconque des revendications 1 à 3, **caractérisée en ce que** (E) est un composé organique à fonction époxy (E1).

5. Composition de caoutchouc de silicone selon l'une quelconque des revendications 1 à 4, **caractérisée en ce que** le composant (D1) est utilisé en tant que (D), qui est choisi parmi les silices fabriquées par voie pyrogène ou les silices précipitées.

6. Composition de caoutchouc de silicone selon l'une quelconque des revendications 1 à 5, **caractérisée en ce qu'**une réticulation est initiée par un rayonnement UV ou UV-VIS.

7. Composition de caoutchouc de silicone selon l'une quelconque des revendications 1 à 6, **caractérisée en ce que** la teneur en (E) par rapport à (D) est mesurée de sorte qu'au moins 0,1 $\mu$mol et au plus 100 mmol de groupes polaires du constituant (E) soient présents pour un gramme du constituant (D).

8. Procédé de fabrication de corps moulés élastomères, **caractérisé en ce que** les corps moulés sont formés à partir des compositions de caoutchouc de silicone selon l'invention selon les revendications 1 à 7 par des procédés DOD additifs balistiques (impression 3D).

9. Utilisation de la composition de caoutchouc de silicone selon l'une quelconque des revendications 1 à 7 pour la fabrication de corps moulés élastomères par des procédés DOD additifs balistiques (impression 3D).

Abbildung 1

Abbildung 2

Abbildung 3

Abbildung 4

Abbildung 5

Abbildung 6

**Beispiel 2**
**(erfindungsgemäß; τ = 2,7)**

Abbildung 7

**Beispiel 10**
**(nicht erfindungsgemäß; τ = 10,4)**

Abbildung 8

Abbildung 9

Abbildung 10

Abbildung 11

# EP 3 245 046 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2015059502 A1
- WO 2015107333 A1
- DE 102011012412 A1
- DE 102011012480 A1
- DE 102008000156 A1
- DE 102008043316 A1
- DE 102009002231 A1
- DE 102009027486 A1
- DE 102010043149 A1
- WO 2009027133 A2
- EP 0122008 A1
- EP 0561919 B1
- EP 0398701 B1
- EP 0146307 B1
- EP 0358452 B1
- EP 0561893 B1
- EP 1050538 B1
- EP 1803728 B1
- EP 686676 B1
- EP 1433749 A1
- DE 102013226494 A1
- DE 3839900 A1

### In der Beschreibung aufgeführte Nicht-Patentliteratur

- **A. GEBHARDT.** Generative Fertigungsverfahren. Carl Hanser Verlag, 2013
- **BRIAN DERBY.** Inkjet Printing of Functional and Structural Materials: Fluid Property Requirements, Feature Stability, and Resolution. *Annu. Rev. Mater. Res.,* 2010, vol. 40, 395-414
- **G. W. SEARS.** *Anal. Chem. 1956,* 1981, vol. 28
- **J. N. ISRAELACHVILI.** Intermolecular and Surface Forces. Academic Press, 2011
- *CHEMICAL ABSTRACTS,* 68083-19-2
- *CHEMICAL ABSTRACTS,* 9003-11-6
- *CHEMICAL ABSTRACTS,* 67746-08-1
- *CHEMICAL ABSTRACTS,* 2530-83-8
- *CHEMICAL ABSTRACTS,* 65799-47-5
- *CHEMICAL ABSTRACTS,* 2897-60-1
- *CHEMICAL ABSTRACTS,* 801307-8
- *CHEMICAL ABSTRACTS,* 77-93-0
- *CHEMICAL ABSTRACTS,* 78-27-3